# EUROPEAN PATENT SPECIFICATION

(11) **EP 4 606 567 B1**
(45) Date of publication and mention of the grant of the patent: **02.09.2026**
(21) Application number: 23893952.4
(22) Date of filing: 23.11.2023
(51) Int. Cl.: B32B 17/00, B32B 17/06, B32B 7/12, B32B 9/00, B32B 9/04, B32B 15/00, B32B 15/04, B32B 15/20, C03C 17/34, C03C 27/12, B60J 1/00, B60J 1/08, B60J 1/18, B60J 7/00, B32B 17/10

(54) **LAMINATED GLASS AND VEHICLE**
VERBUNDGLAS UND FAHRZEUG
VERRE FEUILLETÉ ET VÉHICULE

(30) Priority: 23.11.2022 CN 202211472091
(43) Date of publication of application: 27.08.2025
(73) Proprietor: Fuyao Glass Industry Group Co., Ltd., Fuqing, Fujian 350300 (CN)
(72) Inventor: YANG, Huan, Fuqing Fujian 350300 (CN); ZHANG, Canzhong, Fuqing Fujian 350300 (CN); JIANG, Bingming, Fuqing Fujian 350300 (CN)
(74) Representative: Mewburn Ellis LLP
(86) International application number: PCT/CN2023/133516
(87) International publication number: WO 2024/109864

(56) References cited:
- WO-A1-2005/115747
- WO-A1-2021/090243
- CN-A- 1 823 021
- CN-A- 106 517 815
- CN-A- 114 043 787
- CN-A- 114 057 407
- CN-A- 114 455 856
- CN-A- 115 724 597
- CN-A- 115 847 956

## Description

### TECHNICAL FIELD

The present disclosure relates to the field of glass, and in particular, to a laminated glass and a vehicle.

### BACKGROUND

The interior space of a vehicle becomes extremely hot in summer due to high-temperature environment and strong direct sunlight, and becomes extremely cold in winter due to heat loss of the vehicle caused by low external temperature. More and more vehicles are using a sunroof glass coated with a coating having low-emissivity property on a surface close to the interior space, so as to achieve a "warm in winter and cool in summer" effect inside the vehicles. In summer, the low-emissivity coating can reduce the amount of long-wave thermal radiation emitted from the heated sunroof glass into the interior space of the vehicle, thereby preventing heat from entering the interior space of the vehicle. In winter, the low-emissivity coating can reduce the heat radiation from the interior space of the vehicle to the external environment, thereby preventing heat loss of the interior space of the vehicle.

As the sunroof glass is getting bigger, especially the sunroof glass or the panoramic roof glass on electric vehicles, traditional glass with low-emissivity coating as the sunroof glass is difficult to meet the requirement for thermal comfort inside the vehicle. Research has found that human skin is most sensitive to heat with a wavelength of 1000nm to 1250nm. In practical applications, the thermal blocking effect of the traditional sunroof glass is relatively poor, which fails to provide passages with an adequately comfortable sensation on their skin. Therefore, a sunshade needs to be used in combination with the sunroof glass, which fails to meet requirements of original equipment manufacturers (OEM), such as lightweight of vehicles, increasing headroom, reducing costs. WO2021/090243 A1 discloses an automotive laminated glazing comprising a curved outer glass layer having two oppositely disposed major surfaces, a first surface and a second surface; an inner glass layer having two oppositely disposed major surfaces, a third surface and a fourth surface; a low-e coating applied on the fourth surface of the inner glass layer and at least one plastic bonding layer disposed between second and third surfaces. The low emissivity coating is comprised of a three-layer MSVD deposited stack comprising SiNx/ITO/SiNx or SiOxNy/ITO/ SiOxNy.

### SUMMARY

In view of this, the disclosure provides a laminated glass and a vehicle. The laminated glass has a good thermal blocking effect, which may provide a good sensation on skins of passengers.

The disclosure provides a laminated glass, including an outer glass plate, an adhesive layer, an inner glass plate, and a low-emissivity coating stacked in sequence. The outer glass plate has a first surface and a second surface opposite to each other, the inner glass plate has a third surface and a fourth surface opposite to each other, and the adhesive layer is used to connect the second surface and the third surface. The low-emissivity coating is disposed on the fourth surface of the inner glass plate and includes 1 to 3 transparent conductive oxide coatings. A thermal insulation index *C* of the laminated glass satisfies: *C* = T_{nIR} / R_{IR}, where a range of the thermal insulation index *Cis* 0.008 ≤ *C* ≤ 0.4. T_{nIR} is a transmittance of the laminated glass for infrared with a wavelength of 1000nm to 1250nm, and R_{IR} is a reflectivity of the laminated glass for infrared with a wavelength of 780nm to 2500nm measured at one side of the low-emissivity coating away from the inner glass plate.

The laminated glass provided in the disclosure includes the low-emissivity coating, which is disposed on the fourth surface of the inner glass plate. When the laminated glass is mounted on the vehicle, the low-emissivity coating can reduce the emissivity of the laminated glass measured at the interior side of the vehicle. The low-emissivity coating not only blocks the transmission of heat from the outside of the vehicle to the interior space of the vehicle, but also blocks the dissipation of heat from the interior space of the vehicle to the outside of the vehicle, thus achieving the effect of heat insulation in summer and heat retention in winter. Meanwhile, by controlling the T_{nIR} of the laminated glass for infrared with a wavelength of 1000nm to 1250nm and the R_{IR} of the laminated glass for infrared with a wavelength of 780nm to 2500nm, the range of the thermal insulation index *C* of the laminated glass may be 0.008 ≤ *C* ≤ 0.4, so that the laminated glass has an ideal thermal blocking effect, which may provide a good sensation on skins of passengers. When the laminated glass is mounted on the vehicle, an ideal thermal blocking effect may be achieved without a sunshade or other accessories, thereby meeting the requirements such as lightweight of vehicles, increasing headroom, reducing costs.

Further, a material of each of the 1 to 3 transparent conductive oxide coatings is indium tin oxide. The inner glass plate includes iron oxide, and a ratio of a mass of total iron as Fe₂O₃ in the inner glass plate to a mass of indium in 1 to 3 the transparent conductive oxide coatings ranges from 20:1 to 500:1.

Further, the inner glass plate is a tinted glass, the mass fraction of total iron as Fe₂O₃ in the inner glass plate ranges from 0.9% to 2.2%, and a thickness of the inner glass plate ranges from 0.7mm to 2.1mm. When the mass fraction of total iron as Fe₂O₃ in the inner glass plate ranges from 0.9% to 2.2%, the T_{nIR} of the laminated glass for infrared with a wavelength of 1000nm to 1250nm is within a reasonable range, so that the laminated glass can effectively block the infrared with a wavelength of 1000nm to 1250nm from entering the interior space of the vehicle through the laminated glass. In this way, the laminated glass has an ideal thermal blocking effect, which may provide a good sensation on skins of passengers. When the thickness of the inner glass plate ranges from 0.7mm to 2.1mm, the thickness of the inner glass plate is within a reasonable range, so that the inner glass plate may be applied to the vehicle after being combined with the outer glass plate by the adhesive layer.

Further, a total thickness of the 1 to 3 transparent conductive oxide coatings ranges from 50nm to 300nm, and a ratio of a mass of total iron as Fe₂O₃ in the inner glass plate to a mass of indium in the 1 to 3 transparent conductive oxide coatings ranges from 50:1 to 200:1. When the total thickness of the transparent conductive oxide coating ranges from 50nm to 300nm, the laminated glass has a low emissivity.

Further, a visible light transmittance of the laminated glass ranges from 0.5% to 10%, an emissivity of the laminated glass measured at the side of the low-emissivity coating away from the inner glass plate is less than or equal to 0.25, and a visible light reflectivity of the laminated glass measured at the side of the low-emissivity coating away from the inner glass plate is less than or equal to 4%. When the visible light transmittance of the laminated glass ranges from 0.5% to 10%, the laminated glass has a low visible light transmittance, which may protect the privacy of passengers and serve as a substitute for the sunshade, making it suitable for being applied to the sunroof glass, the side window glass, and the rear window glass of the vehicle. When the emissivity of the laminated glass is less than or equal to 0.25, the laminated glass has a low-emissivity property, so that the laminated glass can effectively block the transmission of heat from the outside of the vehicle to the interior space of the vehicle in summer and block the dissipation of heat from the interior space of the vehicle to the outside of the vehicle in winter. Therefore, the effect of heat insulation in summer and heat retention in winter may be achieved. The visible light reflectivity of the laminated glass measured at the side of the low-emissivity coating away from the inner glass plate is low. When the laminated glass is applied to the vehicle, especially to the sunroof glass of the vehicle, the laminated glass can reduce or even eliminate the formation of obvious reflections of passengers and objects on the sunroof glass due to specular reflection, thereby reducing visual interference caused by reflections for passengers, especially those in the rear seats, and improving the passenger experience.

Further, the low-emissivity coating further includes at least two first dielectric layers. A first dielectric layer is disposed on each of two opposite surfaces of each transparent conductive oxide coating, and a material of the at least two first dielectric layers is selected from nitride, oxide, or oxynitride of at least one of zinc (Zn), tin (Sn), titanium (Ti), silicon (Si), aluminum (Al), magnesium (Mg), or zirconium (Zr). In the preparation process of the laminated glass, high-temperature heat treatment and bending processes are required. The first dielectric layer can protect the transparent conductive oxide coating from corrosion or damage during the preparation process or usage, can adjust the optical effect and appearance color of the low-emissivity coating, and can improve the adhesion performance between the low-emissivity coating and the inner glass plate, thereby being conducive to achieving the thermal blocking effect of the laminated glass.

Further, the laminated glass further includes an infrared reflection coating, where the infrared reflection coating is disposed between the inner glass plate and the outer glass plate, the infrared reflection coating includes 1 to 5 metal layers, and a material of each of the 1 to 5 metal layers is selected from metal or alloy of at least one of silver (Ag), aurum (Au), copper (Cu), Al, or platinum (Pt). In the laminated glass provided in the disclosure, the metal layer is conducive to making the infrared reflection coating have a good effect of reflecting infrared.

Further, the infrared reflection coating further includes at least two second dielectric layers. A second dielectric layer is disposed on each of two opposite surfaces of each metal layer, and a material of the at least two second dielectric layers is selected from nitride, oxide, or oxynitride of at least one of Zn, Sn, Ti, Si, Al, nickel (Ni), chromium (Cr), niobium (Nb), Mg, Zr, gallium (Ga), yttrium (Y), indium (In), antimony (Sb), vanadium (V), or tantalum (Ta). In the preparation process of the laminated glass, high-temperature heat treatment and bending processes are required. The second dielectric layer can protect the metal layer from oxidation or damage during the preparation process or usage, and can adjust the optical effect and appearance color of the infrared reflection coating, thereby improving the adhesion performance of the infrared reflection coating, which is conducive to achieving the thermal blocking effect of the laminated glass.

Further, the outer glass plate is a clear glass with a visible light transmittance greater than or equal to 80%, or the outer glass plate is a clear glass with a visible light transmittance greater than or equal to 90%. When the laminated glass provided in the disclosure has the infrared reflection coating, the clear glass serving as the laminated glass can maximize the function of the infrared reflection coating in reflecting infrared in sunlight, so as to reflect infrared in sunlight as much as possible and absorb infrared in sunlight as little as possible, thereby achieving an ideal thermal blocking effect.

Further, the laminated glass does not include an infrared reflection coating, the outer glass plate is a tinted glass, a mass fraction of total iron as Fe₂O₃ in the outer glass plate ranges from 0.7% to 2.2%, and a thickness of the outer glass plate ranges from 2.1mm to 4.2mm. The outer glass plate is a tinted glass, which is beneficial for achieving a visible light transmittance of less than or equal to 10% and a total solar transmittance (TTS) of greater than or equal to 25% for the laminated glass.

Further, the range of the thermal insulation index *C* of the laminated glass is 0.03 ≤ *C* ≤ 0.25. When the thermal insulation index *C* of the laminated glass satisfies 0.03 ≤ *C* ≤ 0.25, the laminated glass has an ideal thermal blocking effect, which may provide a good sensation on skins of passengers.

Further, the range of the thermal insulation index *C* of the laminated glass is 0.009 ≤ *C* ≤ 0.15, or the range of the thermal insulation index *C* of the laminated glass is 0.009 ≤ *C* ≤ 0.10, or the range of the thermal insulation index *C* of the laminated glass is 0.009 ≤ *C* ≤ 0.05. When the thermal insulation index *C* of the laminated glass satisfies 0.009 ≤ *C* ≤ 0.15, the laminated glass has a more ideal thermal blocking effect, which may provide a good sensation on skins of passengers.

Further, the adhesive layer is a tinted thermoplastic polymer film, and the thermoplastic polymer film is selected from at least one of polyvinyl butyral, polyurethane, ethylene-vinyl acetate copolymer, or ionic polymer, and the adhesive layer has a visible light transmittance ranging from 1% to 20%. The thermoplastic polymer film can bond the inner glass plate and the outer glass plate, and the thermoplastic polymer film has a good bonding performance, which can effectively improve the bonding strength between the inner glass plate and the outer glass plate.

Further, a visible light transmittance of the inner glass plate ranges from 34% to 42%, and a value range of *L* in a Lab value of a color of the inner glass plate is 65 to 71.5, a value range of *a* is -3.5 to -2, and a value range of *b* value is 2 to 3.5. In the disclosure, the inner glass plate is a grey glass.

Further, a visible light transmittance of the inner glass plate ranges from 26% to 34%, and a value range of *L* in a Lab value of a color of the inner glass plate is 58.5 to 65, a value range of *a* is -5 to -3.5, and a value range of *b* is 0.5 to 2. In the disclosure, the inner glass plate is a grey glass.

Further, the laminated glass further includes a light-adjustment component disposed between the second surface and the third surface. The light-adjustment component includes at least one of a polymer-dispersed liquid crystal light-adjustment film, a suspended particle light-adjustment film, or an electrochromic light-adjustment film. The light-adjustment component is configured to adjust the visible light transmittance of the laminated glass, so as to meet the requirement for optical performance in different usage scenarios.

The disclosure further provides a vehicle. The vehicle includes a vehicle body and the laminated glass provided in the disclosure. The laminated glass is mounted on the vehicle body as at least one of a sunroof glass, a side window glass, or a rear windshield glass of the vehicle. In the vehicle provided in the disclosure, the visible light transmittance and the total solar transmittance of the laminated glass are both low, so that the laminated glass has a good thermal blocking effect. In addition, the laminated glass has a low emissivity, so that passengers can have a good experience when the laminated glass is applied to the vehicle.

The laminated glass provided in the disclosure includes the low-emissivity coating, which is disposed on the fourth surface of the inner glass plate. When the low-emissivity coating is mounted on the vehicle, the low-emissivity coating can reduce the emissivity of the laminated glass measured at the interior side of the vehicle. The low-emissivity coating not only blocks the transmission of heat from the outside of the vehicle to the interior space of the vehicle, but also blocks the dissipation of heat from the inside of the vehicle to the outside of the vehicle, thus achieving the effect of thermal insulation in summer and heat retention in winter. Meanwhile, by controlling the T_{nIR} of the laminated glass for infrared with a wavelength from 1000nm to 1250nm and the R_{IR} of the laminated glass for infrared with a wavelength from 780nm to 2500nm, the range of the thermal insulation index *C* of the laminated glass may be 0.008 ≤ *C* ≤ 0.4, so that the laminated glass has an ideal thermal blocking effect, which may provide a good sensation on skins of passengers. When the laminated glass is mounted on the vehicle, an ideal thermal blocking effect may be achieved without a sunshade or other accessories, thereby meeting requirements such as lightweight of vehicles, increasing headroom, reducing costs.

### BRIEF DESCRIPTION OF THE DRAWINGS

In order to describe technical solutions of embodiments of the disclosure more clearly, the following will give a brief introduction to the accompanying drawings used for describing the embodiments. Apparently, the accompanying drawings hereinafter described are some embodiments of the present disclosure. Based on these drawings, those of ordinary skill in the art can also obtain other drawings without creative effort.
FIG. 1 is a schematic structural view of a laminated glass provided in an embodiment of the disclosure.
FIG. 2 is a sectional view of a laminated glass provided in an embodiment of the disclosure, taken along line A-A in FIG. 1.
FIG. 3 is a sectional view of a laminated glass provided in another embodiment of the disclosure, taken along line A-A in FIG. 1.
FIG. 4 is a sectional view of a laminated glass provided in another embodiment of the disclosure, taken along line A-A in FIG. 1.
FIG. 5 is a sectional view of a laminated glass provided in another embodiment of the disclosure, taken along line A-A in FIG. 1.
FIG. 6 is a sectional view of a laminated glass provided in another embodiment of the disclosure, taken along line A-A in FIG. 1.
FIG. 7 is a sectional view of a laminated glass provided in another embodiment of the disclosure, taken along line A-A in FIG. 1.
FIG. 8 is a sectional view of a laminated glass provided in another embodiment of the disclosure, taken along line A-A in FIG. 1.
FIG. 9 is a sectional view of a laminated glass provided in another embodiment of the disclosure, taken along line A-A in FIG. 1.
FIG. 10 is a sectional view of a laminated glass provided in another embodiment of the disclosure, taken along line A-A in FIG. 1.
FIG. 11 is a schematic structural view of a vehicle provided in an embodiment of the disclosure.

### Reference signs:

10 - laminated glass, 11 - inner glass plate, 111 - third surface, 112 - fourth surface, 13 - low-emissivity coating, 131 - transparent conductive oxide coating, 132 - first dielectric layer, 15 - outer glass plate, 151 - first surface, 152 - second surface, 17 - adhesive layer, 18 - infrared reflection coating, 181 - second dielectric layer, 182 - second inner dielectric layer, 183 - second outer dielectric layer, 184 - metal layer, 19 - light-adjustment component, 30 - vehicle, 31 - vehicle body.

### DETAILED DESCRIPTION

The following will clearly and completely illustrate technical solutions of embodiments of the disclosure with reference to the accompanying drawings of embodiments of the disclosure. Apparently, embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

The terms "first", "second", and the like in the description, claims of the present disclosure, and the above accompanying drawings are used for distinguishing different objects, rather than for describing a specific order. In addition, the terms "include", "have", and any variations thereof are intended to cover non-exclusive inclusions. For example, a process, method, system, product, or apparatus that includes a series of steps or units is not limited to the listed steps or units, but optionally further includes steps or units not listed, or optionally further includes other steps or units inherent to the process, method, product, or apparatus.

Reference to "embodiment" or "implementation" herein means that a particular feature, structure, or characteristic described in conjunction with the embodiment may be included in at least one embodiment of the present disclosure. The presence of the term at each place in the specification does not necessarily refer to the same embodiment, nor does it refer to a separate or alternative embodiment that is mutually exclusive of other embodiments. It may be understood by those skilled in the art, both explicitly and implicitly, that the embodiments described herein may be combined with other embodiments.

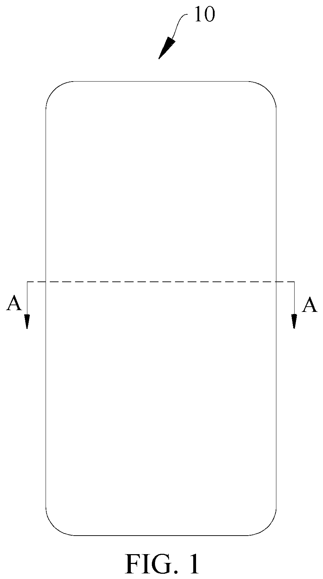

Reference is made to FIG. 1 to FIG. 3. Embodiments of the disclosure provide a laminated glass 10. The laminated glass 10 includes an outer glass plate 15, an adhesive layer 17, an inner glass plate 11, and a low-emissivity coating 13 stacked in sequence. The outer glass plate 15 has a first surface 151 and a second surface 152 opposite to each other, the inner glass plate 11 has a third surface 111 and a fourth surface 112 opposite to each other, and the adhesive layer 17 is used to connect the second surface 152 and the third surface 111. The low-emissivity coating 13 is disposed on the fourth surface 112 of the inner glass plate 11 and includes 1 to 3 transparent conductive oxide coatings 131. A thermal insulation index C of the laminated glass 10 satisfies: *C* = T_{nIR} / R_{IR}, where a range of the thermal insulation index *C* is 0.008 ≤ *C* ≤ 0.4. T_{nIR} is a transmittance of the laminated glass 10 for infrared with a wavelength of 1000nm to 1250nm, and R_{IR} is a reflectivity of the laminated glass 10 for infrared with a wavelength of 780nm to 2500nm measured at one side of the low-emissivity coating 13 away from the inner glass plate 11.

Specifically, the value of thermal insulation index of the laminated glass 10 may be, but is not limited to 0.008, 0.009, 0.01, 0.02, 0.05, 0.06, 0.1, 0.13, 0.15, 0.2, 0.24, 0.27, 0.31, 0.35, 0.37, 0.4, etc.

Optionally, in some embodiments, there is one transparent conductive oxide coating 131 in the low-emissivity coating 13. In some other embodiments, there are two transparent conductive oxide coatings 131 in the low-emissivity coating 13. In some other embodiments, there are three transparent conductive oxide coatings 131 in the low-emissivity coating 13.

In embodiments of the disclosure, a surface of the outer glass plate 15 away from the adhesive layer 17 is the first surface 151, and a surface of the outer glass plate 15 close to the adhesive layer 17 is the second surface 152. A surface of the inner glass plate 11 away from the adhesive layer 17 is the third surface 111, and a surface of the inner glass plate 11 close to the adhesive layer 17 is the fourth surface 112. When the laminated glass 10 is applied to the vehicle 30, the first surface 151 is the outermost surface of the laminated glass 10 close to the outside of the vehicle, and the fourth surface 112 is the innermost surface of the laminated glass 10 close to the inside of the vehicle.

The laminated glass 10 in the disclosure may be applied to a building, the vehicle 30, etc. When the laminated glass 10 is applied to the vehicle 30, the laminated glass 10 may be applied to at least one of a sunroof glass, a side window glass, or a rear window glass of the vehicle 30.

Human skin is most sensitive to heat with a wavelength of 1000nm to 1250nm. Therefore, by controlling the T_{nIR} of the laminated glass for infrared with a wavelength of 1000nm to 1250nm and the R_{IR} of the laminated glass for infrared with a wavelength of 780nm to 2500nm, the thermal insulation index C may be controlled within a certain range. In this way, the laminated glass 10 not only blocks the transmission of heat from the outside of the vehicle 30 to the interior space of the vehicle 30 effectively, but also blocks the dissipation of heat from the interior space of the vehicle 30 to the outside of the vehicle 30, and the laminated glass 10 has a better low-emissivity property. Meanwhile, the laminated glass 10 has an ideal thermal blocking effect, which may provide a good sensation on skins of passengers. When the laminated glass 10 is mounted on the vehicle, an ideal thermal blocking effect may be achieved without a sunshade or other accessories, thereby meeting requirements such as lightweight of vehicles, increasing headroom, reducing costs. When the thermal insulation index *C* satisfies 0.008 ≤ *C* ≤ 0.4, the laminated glass 10 has an ideal thermal blocking effect, which may provide a good sensation on skins of passengers. When the thermal insulation index *C* is greater than 0.4, the laminated glass 10 has a high transmittance for infrared with a wavelength of 1000nm to 1250nm and has a low reflectivity for infrared with a wavelength of 780nm to 2500nm, resulting in a poor thermal blocking effect of the laminated glass and a poor sensation on skins of passengers. When the thermal insulation index *C* is less than 0.008, the laminated glass 10 has an excellent thermal blocking effect. However, there is a higher requirement for the production materials and processes for making the laminated glass 10, which will further increase the production cost of the laminated glass 10.

Optionally, in some embodiments, the range of the thermal insulation index *C* of the laminated glass 10 is 0.03 ≤ *C* ≤ 0.25. Specifically, the thermal insulation index *C* of the laminated glass 10 may be, but is not limited to, 0.03, 0.05, 0.08, 0.12, 0.13, 0.15, 0.18, 0.19, 0.20, 0.22, 0.24, 0.25, etc. When the thermal insulation index C of the laminated glass 10 satisfies 0.03 ≤ *C* ≤ 0.25, the laminated glass 10 has an ideal thermal blocking effect, which may provide a good sensation on skins of passengers.

Optionally, in some other embodiments, the range of the thermal insulation index *C* of the laminated glass 10 is 0.009 ≤ *C* ≤ 0.15. Specifically, the thermal insulation index *C* of the laminated glass 10 may be, but is not limited to, 0.009, 0.01, 0.03, 0.05, 0.07, 0.09, 0.10, 0.11, 0.22, 0.14, 0.15, etc. When the thermal insulation index *C* of the laminated glass 10 satisfies 0.009 ≤ *C* ≤ 0.15, the laminated glass 10 has an ideal thermal blocking effect, which may provide a good sensation on skins of passengers.

In an embodiment of the disclosure, the visible light transmittance of the laminated glass 10 ranges from 0.5% to 10%. Specifically, the visible light transmittance of the laminated glass 10 may be, but is not limited to, 0.5%, 1.5%, 2%, 2.5%, 3.3%, 4.8%, 5%, 6.7%, 8%, 9.4%, 10%, etc.

When the visible light transmittance of the laminated glass 10 ranges from 0.5% to 10%, the laminated glass 10 has a low visible light transmittance, which may protect the privacy of passengers and serve as a substitute for the sunshade, making it suitable for being applied to the sunroof glass, the side window glass, and the rear window glass of the vehicle 30.

In an embodiment of the disclosure, the emissivity of the laminated glass 10 measured at the side of the low-emissivity coating 13 away from the inner glass plate 11 is less than or equal to 0.25. Specifically, the emissivity of the laminated glass 10 may be, but is not limited to 0.12, 0.14, 0.17, 0.19, 0.21, 0.22, 0.23, 0.25, etc.

When the emissivity of the laminated glass 10 is smaller than or equal to 0.25, the laminated glass 10 has a low-emissivity property, so that the laminated glass 10 can effectively block the transmission of heat from the outside of the vehicle 30 to the interior space of the vehicle in summer and block the dissipation of heat from the interior space of the vehicle 30 to the outside of the vehicle 30 in winter. Therefore, the effect of heat insulation in summer and heat retention in winter may be achieved.

In an embodiment of the disclosure, the visible light reflectivity of the laminated glass 10 measured at the side of the low-emissivity coating 13 away from the inner glass plate 11 is less than or equal to 4%. Specifically, the reflectivity of the laminated glass 10 may be, but is not limited to, 4%, 3.8%, 3.75%, 3.6%, 3.5%, 3.2%, 3.1%, 3.0%, etc.

The visible light reflectivity of the laminated glass 10 measured at the side of the low-emissivity coating 13 away from the inner glass plate 11 is low. When the laminated glass 10 is applied to the vehicle 30, especially to the sunroof glass of the vehicle 30, the laminated glass 10 can reduce or even eliminate the formation of obvious reflections of passengers and objects on the sunroof glass due to specular reflection, thereby reducing visual interference caused by reflections for passengers, especially those in the rear seats, and improving the passenger experience.

Preferably, the visible light reflectivity of the laminated glass 10 is less than or equal to 3%. Specifically, the visible light reflectivity of the laminated glass 10 may be, but is not limited to, 3%, 2.8%, 2.75%, 2.6%, 2.5%, 2.2%, 2.1%, 2.0%, etc.

More preferably, the visible light reflectivity of the laminated glass 10 is less than or equal to 2%. Specifically, the visible light reflectivity of the laminated glass 10 may be, but is not limited to, 2%, 1.8%, 1.75%, 1.6%, 1.5%, 1.2%, 1.1%, 0.9%, 0.8%, 0.6%, etc.

In an embodiment of the disclosure, the inner glass plate 11 is a tinted glass.

It may be understood that, the inner glass plate 11 is a tinted glass. Optionally, the inner glass plate 11 may be, but is not limited to any one of a green glass, a grey glass, a blue glass, or a brown glass.

In some embodiments of the disclosure, the visible light transmittance of the inner glass plate 11 ranges from 5% to 45%. Specifically, the visible light transmittance of the inner glass plate 11 may be, but is not limited to, 5%, 8%, 16%, 19%, 23%, 25%, 33%, 35%, 37%, 40%, etc.

Optionally, in some embodiments, when the visible light transmittance of the inner glass plate 11 ranges from 34% to 42%, a value range of L in the Lab value of the color of the inner glass plate 11 is 65 to 71.5, a value range of *a* is -3.5 to -2, and a value range of *b* is 2 to 3.5. In the embodiment, the inner glass plate 11 is a grey glass.

Specifically, the visible light transmittance of the inner glass plate 11 may be, but is not limited to, 34%, 35%, 36%, 37%, 39%, 40%, 41%, 42%, etc. In the Lab value of the color of the inner glass plate 11, the value of *L* may be, but is not limited to, 65, 65.3, 66.4, 66.6, 67.2, 67.9, 68.5, 69.3, 69.7, 70.2, 70.9, 71.5, etc. The value of *a* may be, but is not limited to, -3.5, -3.4, -3.1, -2.9, -2.7, -2.5, -2.3, -2.1, -2, etc. The value of *b* may be, but is not limited to, 2, 2.1, 2.3, 2.4, 2.7, 3.0, 3.1, 3.3, 3.4, 3.5, etc.

Optionally, in some other embodiments, when the visible light transmittance of the inner glass plate 11 ranges from 26% to 34%, a value range of *L* in the Lab value of the color of the inner glass plate 11 is 58.5 to 65, a value range of *a* is -5 to -3.5, and a value range of *b* is 0.5 to 2. In the embodiment, the inner glass plate 11 is a grey glass.

Specifically, the visible light transmittance of the inner glass plate 11 may be, but is not limited to, 26%, 26.3%, 27.1%, 27.7%, 28.4%, 29%, 30.4%, 31.4%, 32.2%, 32.8%, 33.6%, 34%, etc. In the Lab value of the color of the inner glass plate 11, the value of *L* may be, but is not limited to, 58.5, 58.9, 59.4, 59.8, 60.2, 60.8, 61.4, 61.8, 62.7, 63.5, 64.2, 64.8, 65, etc. The value of *a* may be, but is not limited to, -5, -4.9, -4.7, -4.5, -4.4, -4.2, -4.0, -3.9, -3.8, -3.7, -3.6, -3.5, etc. The value of *b* may be, but is not limited to, 0.5, 0.6, 0.8, 1.0, 1.2, 1.3, 1.5, 1.7, 1.8, 1.9, 2, etc.

In an embodiment of the disclosure, the mass fraction of total iron as Fe₂O₃ in the inner glass plate 11 ranges from 0.9% to 2.2%. Specifically, the mass fraction of total iron as Fe₂O₃ in the inner glass plate 11 may be, but is not limited to 0.9%, 1.0%, 1.1%, 1.3%, 1.4%, 1.7%, 1.8%, 2.0%, 2.1%, 2.2%, etc.

When the mass fraction of total iron as Fe₂O₃ in the inner glass plate 11 ranges from 0.9% to 2.2%, the T_{nIR} of the laminated glass 10 for infrared with a wavelength of 1000nm to 1250nm is within a reasonable range, so that the laminated glass 10 can effectively block the infrared with a wavelength of 1000nm to 1250nm from entering the interior space of the vehicle 30 through the laminated glass 10. In this way, the laminated glass 10 has an ideal thermal blocking effect, which may provide a good sensation on skins of passengers.

The iron oxides in the glass mainly serve as coloring components and functional components. The iron in the glass predominantly exists in the form of Fe²⁺ and Fe³⁺. Fe²⁺ has an absorption peak near the wavelength of 1100nm, and Fe³⁺ has an absorption peak near the wavelength of 400nm. By adjusting the mass of total iron in the inner glass plate 11, the visible light transmittance and the T_{nIR} of the laminated glass 10 may be adjusted, particularly the T_{nIR} for infrared with a wavelength near 1100nm. The total iron in the disclosure refers to all iron oxides in the inner glass plate 11, including both Fe²⁺ (FeO) and Fe³⁺ (Fe₂O₃), which is a common expression in the related field and does not imply that all iron oxides in the glass are Fe₂O₃.

Optionally, the thickness of the inner glass plate 11 ranges from 0.7mm to 2.1mm. Specifically, the thickness of the inner glass plate 11 may be, but is not limited to, 0.7mm, 0.9mm, 1.0mm, 1.1mm, 1.3mm, 1.5mm, 1.7mm, 1.8mm, 2.0mm, 2.1mm, etc.

When the thickness of the inner glass plate 11 ranges from 0.7mm to 2.1mm, the thickness of the inner glass plate 11 is within a reasonable range, so that the inner glass plate 11 may be applied to the vehicle 30 after being combined with the outer glass plate 15 by the adhesive layer 17.

Optionally, in terms of mass fraction, the inner glass plate 11 includes 1.1% to 1.9% of total iron as Fe₂O₃, 140 part per million (ppm) to 300ppm of Co₂O₃, 10ppm to 320ppm of Cr₂O₃, 55ppm to 75ppm of SrO, and 10ppm to 30ppm of Se.

Specifically, the mass fraction of total iron as Fe₂O₃ in the inner glass plate 11 may be, but is not limited to, 1.1%, 1.2%, 1.3%, 1.4%, 1.5%, 1.6%, 1.7%, 1.8%, and 1.9%. The mass fraction of Co₂O₃ in the inner glass plate 11 may be, but is not limited to, 140ppm, 146ppm, 152ppm, 165ppm, 170ppm, 185ppm, 196ppm, 206ppm, 218ppm, 225ppm, 240ppm, 250ppm, 260ppm, 270ppm, 280ppm, 300ppm, etc. The mass fraction of Cr₂O₃ in the inner glass plate 11 may be, but is not limited to, 10ppm, 16ppm, 25ppm, 38ppm, 56ppm, 88ppm, 107ppm, 138ppm, 156ppm, 188ppm, 220ppm, 240ppm, 270ppm, 298ppm, 300ppm, 320ppm, etc. The mass fraction of SrO in the inner glass plate 11 may be, but is not limited to, 55ppm, 56ppm, 58ppm, 62ppm, 65ppm, 68ppm, 71ppm, 72ppm, 73ppm, 75ppm, etc. The mass fraction of Se in the inner glass plate 11 may be, but is not limited to, 10ppm, 11ppm, 15ppm, 18ppm, 21ppm, 22ppm, 23ppm, 25ppm, 28ppm, 30ppm, etc. In the embodiments of the disclosure, the inner glass plate 11 is a tinted glass, which can block infrared from passing through the inner glass plate 11, so that the laminated glass 10 has a good heat insulation effect and a suitable visible light transmittance.

Optionally, the material of the transparent conductive oxide coating 131 is selected from at least one of doped zinc oxide (ZnO), indium tin oxide (ITO), nickel chromium oxide (CrNiOₓ), fluorine-doped tin oxide (FTO), or zinc tin oxide (ZnSnOₓ), where the doped zinc oxide is zinc oxide doped with one or more elements selected from a group consisting of Al, tungsten (W), hafnium (Hf), gallium (Ga), yttrium (Y), niobium (Nb), and neodymium (Nd).

Optionally, the low-emissivity coating 13 may be directly deposited onto the fourth surface 112 through chemical vapor deposition (CVD) or physical vapor deposition (PVD). The total thickness of the transparent conductive oxide coating 131 in the low-emissivity coating 13 ranges from 50nm to 300nm. In the case where the low-emissivity coating 13 is not provided, the emissivity of the laminated glass 10 is about 0.9. The low-emissivity coating 13 can reduce the emissivity of the laminated glass 10, so that the emissivity of the laminated glass 10 may be less than or equal to 0.25. Emissivity is primarily used to measure the ability of an object surface to release energy in the form of radiation, usually reflecting the ability to block mid-to-far infrared (wavelengths greater than 2500nm).

Optionally, in an embodiment of the disclosure, the transparent conductive oxide coating 131 is an ITO layer deposited through magnetron sputtering process. The target material of the transparent conductive oxide coating 131 includes indium oxide and tin oxide, with a ratio of the mass of indium oxide to the mass of tin oxide ranging from 80:20 to 90:10. Specifically, the ratio of the mass of indium oxide to the mass of tin oxide may be, but is not limited to, 80:20, 82:18, 85:15, 88:12, 90:10, etc.

Optionally, the total thickness of the transparent conductive oxide coating 131 in the low-emissivity coating 13 ranges from 50nm to 300nm. Specifically, the total thickness of the transparent conductive oxide coating 131 may be, but is not limited to, 50nm, 70nm, 90nm, 130nm, 180nm, 190nm, 220nm, 230nm, 260nm, 300nm, etc.

When the total thickness of the transparent conductive oxide coating 131 ranges from 50nm to 300nm, the laminated glass 10 has a low emissivity. When the total thickness of the transparent conductive oxide coating 131 is less than 50nm, the laminated glass 10 has a poor low-emissivity property and cannot effectively block the transmission of heat from the inside of the vehicle 30 to the outside or the transmission of heat from the outside of the vehicle 30 to the inside. When the total thickness of the transparent conductive oxide coating 131 is greater than 300nm, the visible light reflectivity of the laminated glass 10 also increases, which reduces the antireflection effect of the laminated glass 10, causing interference and discomfort to passengers.

In an embodiment of the disclosure, the transparent conductive oxide coating 131 is an ITO layer, the inner glass plate 11 includes iron oxide, and the ratio of the mass of total iron as Fe₂O₃ in the inner glass plate 11 to the mass of indium in the 1 to 3 transparent conductive oxide coatings 131 ranges from 20:1 to 500:1, preferably from 50:1 to 200:1. Specifically, the ratio of the mass of total iron as Fe₂O₃ in the inner glass plate 11 to the mass of indium in the 1 to 3 transparent conductive oxide coatings 131 may be, but is not limited to, 20:1, 30:1, 50:1, 80:1, 100:1, 110:1, 120:1, 150:1, 180:1, 200:1, 250:1, 300:1, 350:1, 400:1, 450:1, 500:1, etc.

When the transparent conductive oxide coating 131 is an ITO layer deposited through magnetron sputtering process, the low-emissivity coating 13 including the ITO layer is disposed on the fourth surface 112 of the inner glass plate 11. Increasing the mass of total iron as Fe₂O₃ in the inner glass plate 11 can reduce the visible light transmittance of the laminated glass 10 and also decrease the T_{nIR} for infrared with a wavelength of 1000nm to 1250nm. Correspondingly, increasing the mass of total iron as Fe₂O₃ in the inner glass plate 11 increases the manufacturing difficulty and cost of the inner glass plate 11, and results in that the laminated glass 10 is easier to absorb heat to heat up in summer. Increasing the mass of indium in the 1 to 3 transparent conductive oxide coatings 131 can reduce the emissivity of the laminated glass 10, and increase the reflectivity of the laminated glass 10 for infrared with a wavelength from 780nm to 2500nm. Correspondingly, increasing the mass of indium in the 1 to 3 transparent conductive oxide coatings 131 also increases the manufacturing cost and difficulty of the laminated glass 10, and results in that the low-emissivity coating 13 may not meet the automotive-grade requirements for vehicle glass. In this embodiment of the disclosure, when the ratio of the mass of total iron as Fe₂O₃ in the inner glass plate 11 to the mass of indium in the 1 to 3 transparent conductive oxide coatings 131 ranges from 20:1 to 500:1, it is easier to achieve that the thermal insulation index *C* of the laminated glass 10 satisfies 0.008 ≤ *C* ≤ 0.4, or even 0.03 ≤ *C* ≤ 0.25, or 0.009 ≤ *C* ≤ 0.15, resulting in an ideal thermal blocking effect and providing a good sensation on skins of passengers. When the ratio of the mass of total iron as Fe₂O₃ in the inner glass plate 11 to the mass of indium in the 1 to 3 transparent conductive oxide coatings 131 is greater than 500:1, the inner glass plate 11 is easier to absorb heat and radiate more heat to the inside of the vehicle in summer, resulting in a poor thermal blocking effect and a poor sensation on skins of passengers. Also, it becomes more difficult to coordinate the mass of total iron with other components, thereby raising the manufacturing cost and difficulty of the inner glass plate 11. When the ratio of the mass of total iron as Fe₂O₃ in the inner glass plate 11 to the mass of indium in the 1 to 3 transparent conductive oxide coatings 131 is less than 20:1, the total thickness of the ITO layer is too large, resulting in higher requirements for material and process of the low-emissivity coating 13. The produced low-emissivity coating 13 may not meet the automotive-grade requirements for vehicle glass, thereby further increasing the manufacturing cost of the laminated glass 10.

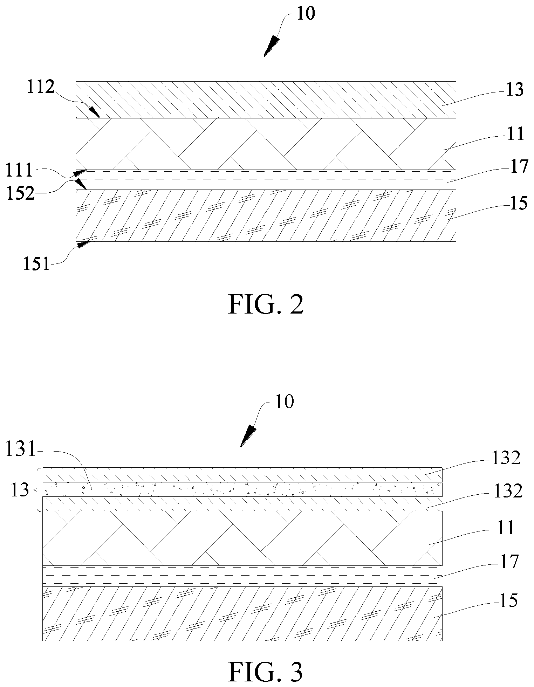

Reference is made to FIG. 3. In an embodiment of the disclosure, the low-emissivity coating 13 further includes at least two first dielectric layers 132, a first dielectric layer 132 is disposed on each of two opposite surfaces of each transparent conductive oxide coating 131. In the preparation process of the laminated glass 10, high-temperature heat treatment and bending processes are required. The first dielectric layer 132 can protect the transparent conductive oxide coating 131 from corrosion or damage during the preparation process or usage, can adjust the optical effect and appearance color of the low-emissivity coating 13, and can improve the adhesion performance between the low-emissivity coating 13 and the inner glass plate 11, thereby being conducive to achieving the thermal blocking effect of the laminated glass 10. In addition, reasonable design and combination of the material and the thickness of the first dielectric layer 132 are beneficial for achieving an antireflective effect of the low-emissivity coating 13, which can reduce or even eliminate the formation of obvious reflections of passengers and objects on the sunroof glass due to specular reflection, thereby reducing visual interference caused by reflections for passengers, especially those in the rear seats, and improving the passenger experience.

Optionally, the material of the first dielectric layer 132 is selected from nitride, oxide, or oxynitride of at least one of Zn, Sn, Ti, Si, Al, Mg, or Zr. Specifically, the material of the first dielectric layer 132 may include, but is not limited to, zinc nitride, zinc oxide, zinc oxynitride, titanium oxynitride, magnesium oxide, aluminum nitride, etc.

Optionally, the thickness of the first dielectric layer 132 ranges from 5nm to 100nm. Specifically, the thickness of the first dielectric layer 132 may be, but is not limited to, 5nm, 10nm, 25nm, 38nm, 45nm, 50nm, 68nm, 75nm, 80nm, 100nm, etc.

In embodiments of the disclosure, when the thickness of the first dielectric layer 132 ranges from 5nm to 100nm, the first dielectric layer 132 can protect the transparent conductive oxide coating 131 from corrosion or damage during the preparation process or usage, can adjust the optical effect and appearance color of the low-emissivity coating 13, and can improve the adhesion performance between the low-emissivity coating 13 and the inner glass plate 11, thereby being conducive to achieving the thermal blocking effect of the laminated glass 10. When the thickness of the first dielectric layer 132 is greater than 100nm, the first dielectric layer 132 is too thick, making it difficult for the first dielectric layer 132 to match with other coatings, thus reducing the thermal blocking effect of the laminated glass 10. When the thickness of the first dielectric layer 132 is less than 5nm, the first dielectric layer 132 is too thin and may be easily worn-out during actual use, making it difficult for the first dielectric layer 132 to continue protecting the transparent conductive oxide coating 131 from corrosion or damage.

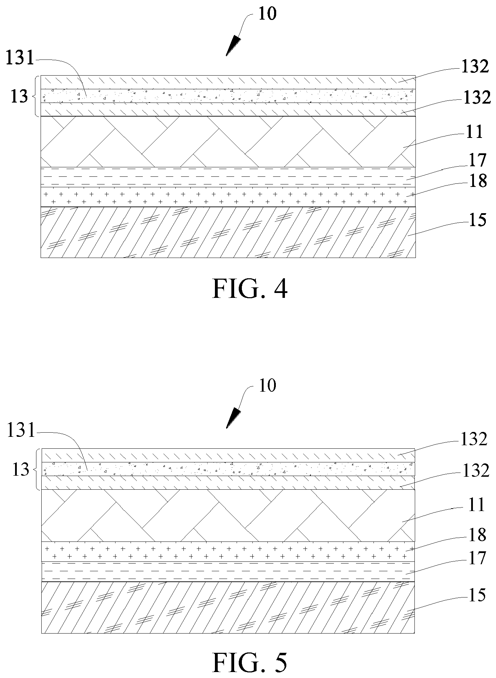

Reference is made to FIG. 4 and FIG. 5. In some embodiments, the laminated glass 10 further includes an infrared reflection coating 18. The infrared reflection coating 18 is disposed between the inner glass plate 11 and the outer glass plate 15, the infrared reflection coating 18 includes 1 to 5 metal layers 184, and a material of the metal layer 184 is selected from metal or alloy of at least one of Ag, Au, Cu, Al, or Pt. Specifically, the infrared reflection coating 18 may be directly disposed on the second surface 152 of the outer glass plate 15 or on the third surface 111 of the inner glass plate 11. The infrared reflection coating 18 may also be firstly disposed on an organic resin film, such as polyethylene glycol terephthalate, and then the organic resin film with the infrared reflection coating 18 is interposed between the second surface 152 and the third surface 111. In this way, the laminated glass 10 may have a visible light transmittance of less than or equal to 10% and a total solar transmittance (TTS) of less than or equal to 25%.

Optionally, the thickness of the infrared reflection coating 18 ranges from 40nm to 500nm. Specifically, the thickness of the infrared reflection coating 18 may be, but is not limited to 40nm, 50nm, 80nm, 140nm, 160nm, 220nm, 280nm, 330nm, 380nm, 440nm, 480nm, 500nm, etc.

When the thickness of the infrared reflection coating 18 ranges from 40nm to 500nm, the infrared reflection coating 18 can effectively reflect infrared in sunlight, thereby blocking the transmission of heat, improving the thermal blocking ability of the laminated glass 10, and reducing the TTS of the laminated glass 10.

Optionally, the material of the metal layer 184 may be, but is not limited to, silver (Ag), aurum (Au), copper (Cu), aluminum (Al), platinum (Pt), silver-copper alloy, copper-aluminum alloy, copper-gold alloy, etc. Among those materials, silver or silver alloys are commonly used, and the silver alloys may be silver-gold alloy, silver-aluminum alloy, silver-copper alloy, silver-platinum alloy, etc.

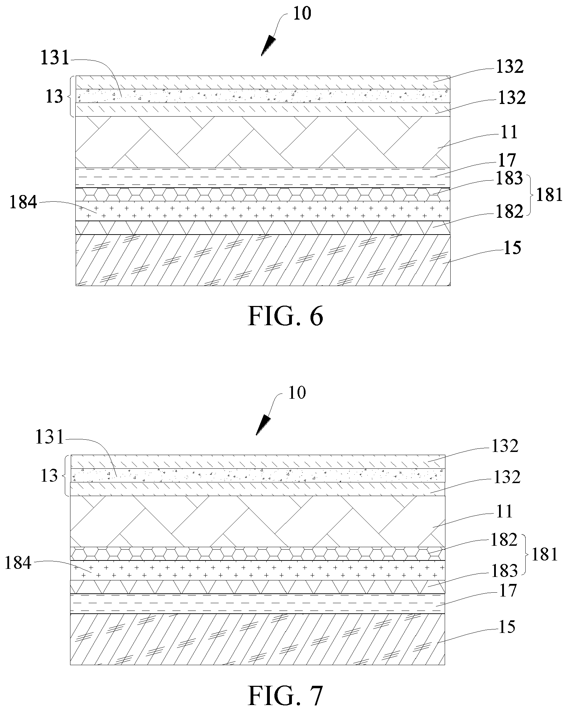

Reference is made to FIG. 6. In some embodiments, in a case where there is only one metal layer 184 in the infrared reflection coating 18, the infrared reflection coating 18 may be called as a single-silver infrared reflection coating. Similarly, when the infrared reflection coating 18 includes two metal layers 184, the infrared reflection coating 18 may be called as a double-silver infrared reflection coating. Similarly, there may be a triple-silver infrared reflection coating, a quadruple-silver infrared reflection coating, or a quintuple-silver infrared reflection coating.

Optionally, the thickness of each metal layer 184 in the infrared reflection coating 18 ranges from 4nm to 20nm. Specifically, the thickness of each metal layer 184 may be, but is not limited to, 4nm, 5nm, 6nm, 8nm, 10nm, 12nm, 14nm, 16nm, 17nm, 19nm, 20nm, etc.

When the thickness of each metal layer 184 ranges from 4nm to 20nm, it allows the infrared reflection coating 18 to have a good infrared reflection effect, and it is beneficial for reducing the design difficulty of the infrared reflection coating 18 and ensuring that the infrared reflection coating 18 can undergo high-temperature heat treatment and bending processes, thus meeting the automotive-grade requirements for the vehicle window.

Reference is made to FIG. 6 and FIG. 7. In an embodiment of the disclosure, the infrared reflection coating 18 further includes at least two second dielectric layers 181, and a second dielectric layer 181 is disposed on each of two opposite surfaces of each metal layer 184. In the preparation process of the laminated glass 10, high-temperature heat treatment and bending processes are required. The second dielectric layer 181 can protect the metal layer 184 from oxidation or damage during the preparation process or usage, and can adjust the optical effect and appearance color of the infrared reflection coating 18, thereby improving the adhesion performance of the infrared reflection coating 18, which is conducive to achieving the thermal blocking effect of the laminated glass 10.

Reference is made to FIG. 6 and FIG. 7. The infrared reflection coating 18 is disposed on the second surface 152 of the outer glass plate 15. For the second dielectric layers 181 disposed on the metal layer 184, one that is closer to the second surface 152 is a second inner dielectric layer 182, and the other that is farther from the second surface 152 is the second outer dielectric layer 183. When the infrared reflection coating 18 is disposed on the third surface 111 of the inner glass plate 11, for the second dielectric layers 181 disposed on the metal layer 184, one that is closer to the third surface 111 is the second inner dielectric layer 182, and the other that is farther from the third surface 111 is the second outer dielectric layer 183. It may be understood that, the total number of the second dielectric layers 181 is one more than the total number of the metal layers 184. For example, the infrared reflection coating 18 includes one metal layer 184 and two second dielectric layers 181, or two metal layers 184 and three second dielectric layers 181, or three metal layers 184 and four second dielectric layers 181, or four metal layers 184 and five second dielectric layers 181, or five metal layers 184 and six second dielectric layers 181.

The material of the second dielectric layer is selected from nitride, oxide, or oxynitride of at least one element of Zn, Sn, Ti, Si, Al, Ni, Cr, Nb, Mg, Zr, Ga, Y, In, Sb, V, or Ta. Optionally, the material of the second dielectric layer may be, but is not limited to, zinc stannate (ZnSnO₃), magnesium-doped zinc stannate, zinc oxide, magnesium-doped zinc oxide, zirconium-doped zinc oxide, niobium oxide, bismuth oxide, aluminum-doped zinc oxide (AZO), zirconium oxide, titanium oxide, peroxo titanium, nickel-chromium, zirconium nitride, silicon nitride, silicon oxide, silicon oxynitride, etc.

In embodiments of the disclosure, the laminated glass 10 includes the low-emissivity coating 13, the inner glass plate 11, the adhesive layer 17, the infrared reflection coating 18, and the outer glass plate 15 stacked in sequence in a direction from the inside to the outside of the vehicle 30. The infrared reflection coating 18 can reflect infrared in sunlight, thereby improving the thermal blocking effect of the laminated glass 10 and effectively blocking the transmission of heat from the exterior to the interior space of the vehicle 30. When the laminated glass 10 is applied to the vehicle 30, an ideal thermal blocking effect may be achieved without a sunshade or other accessories, thereby meeting the requirements such as lightweight of vehicles and reducing costs.

In some embodiments, the outer glass plate 15 is a clear glass with a visible light transmittance greater than or equal to 80%. When the laminated glass 10 includes the infrared reflection coating 18, the laminated glass 10 being a clear glass can maximize the ability of the infrared reflection coating 18 of reflecting infrared in sunlight, thereby reflecting as many infrareds in sunlight as possible and absorbing as few infrared in sunlight as possible, so that an ideal thermal blocking effect may be achieved. Specifically, the visible light transmittance of the outer glass plate 15 may be, but is not limited to, 80%, 82%, 84%, 85%, 88%, etc. More preferably, the visible light transmittance of the outer glass plate 15 is greater than or equal to 90%, and specifically, the visible light transmittance of the outer glass plate 15 may be, but is not limited to, 90%, 92%, 94%, 95%, 98%, etc.

Optionally, in some embodiments, when the laminated glass 10 does not include the infrared reflection coating 18, the outer glass plate 15 is a tinted glass, and the mass fraction of total iron as Fe₂O₃ in the outer glass plate 15 ranges from 0.7% to 2.2%. Specifically, the mass fraction of total iron as Fe₂O₃ in the outer glass plate 15 may be, but is not limited to, 0.7%, 0.8%, 0.9%, 1%, 1.1%, 1.2%, 1.4%, 1.6%, 1.8%, 1.9%, 2.0%, 2.1%, 2.2%, etc.

When the mass fraction of total iron as Fe₂O₃ in the outer glass plate 15 ranges from 0.7% to 2.2%, the T_{nIR} of the laminated glass 10 for infrared with a wavelength of 1000nm to 1250nm is within a reasonable range, such that the laminated glass 10 can effectively block the infrared with a wavelength of 1000nm to 1250nm from passing through the laminated glass 10 into the interior space of the vehicle 30. In this way, the laminated glass 10 has an ideal thermal blocking effect, which provides a good sensation on skins of passengers. It may further ensure that the laminated glass 10 has a visible light transmittance of less than or equal to 10% and a TTS of less than or equal to 25%.

In embodiments of the disclosure, the thickness of the outer glass plate 15 ranges from 2.1mm to 4.2mm. Specifically, the thickness of the outer glass plate 15 may be, but is not limited to, 2.1mm, 2.3mm, 2.5mm, 2.7mm, 2.9mm, 3.0mm, 3.2mm, 3.5mm, 3.85mm, 4.0mm, 4.2mm, etc.

Optionally, the outer glass plate 15 may be, but is not limited to any one of a green glass, a grey glass, a blue glass, or a brown glass.

In some embodiments of the disclosure, the visible light transmittance of the outer glass plate 15 ranges from 5% to 85%. Specifically, the visible light transmittance of the outer glass plate 15 may be, but is not limited to, 5%, 8%, 16%, 19%, 23%, 25%, 33%, 35%, 37%, 40%, 50%, 60%, 70%, 82%, etc. When the visible light transmittance of the outer glass plate 15 ranges from 5% to 85%, the difficulty of high-temperature heat treatment and bending processes for the laminated glass may be reduced.

Optionally, the adhesive layer 17 is disposed between the inner glass plate 11 and the outer glass plate 15, and the adhesive layer 17 is used to bond the inner glass plate 11 and the outer glass plate 15. In some embodiments, the adhesive layer 17 is a transparent thermoplastic polymer film with a visible light transmittance of greater than or equal to 70%. When the adhesive layer 17 is a transparent thermoplastic polymer film with a visible light transmittance of greater than or equal to 70%, the laminated glass 10 has a higher visibility, which allows passengers to have a clearer view when the laminated glass 10 is applied to a vehicle 30. Thus, the laminated glass 10 may be used in side window glass, rear windshield glass, etc., of the vehicle 30. Specifically, the visible light transmittance of the adhesive layer 17 may be, but is not limited to, 70%, 71%, 73%, 75%, 78%, 80%, 82%, etc. In other embodiments, the adhesive layer 17 is a tinted thermoplastic polymer film with a visible light transmittance ranging from 1% to 20%. In this case, the adhesive layer 17 reduces the visible light transmittance of the laminated glass 10, but improves the infrared-blocking ability of the laminated glass 10, thereby providing a good sensation on skins of passengers. However, the adhesive layer 17 provided in the disclosure has a lower visible light transmittance, resulting in that the laminated glass 10 has a lower visible light transmittance. Therefore, the laminated glass 10 is suitable for use only in sunroof glass, which may prevent passengers in the vehicle from being exposed to the glare of sunlight and provide heat insulation. Specifically, the visible light transmittance of the adhesive layer 17 may be, but is not limited to, 1%, 2%, 5%, 7%, 8%, 10%, 12%, 14%, 15%, 18%, 20%, etc.

Optionally, the thermoplastic polymer film is selected from at least one of polyvinyl butyral (PVB) film, polyurethane (PU) film, ethylene-vinyl acetate copolymer (EVA) film, or ionic polymer (e.g., SentryGlas^{®} Plus (SGP)) film. The thermoplastic polymer film can bond the inner glass plate 11 and the outer glass plate 15, and has good adhesion performance, which can effectively improve the bonding strength between the inner glass plate 11 and the outer glass plate 15.

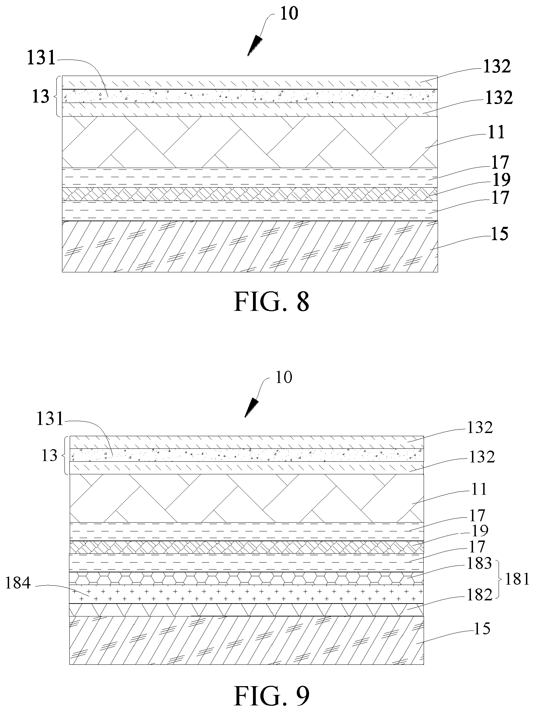

Reference is made to FIG. 8 to FIG. 10. In an embodiment of the disclosure, the laminated glass 10 further includes a light-adjustment component 19 disposed between the inner glass plate 11 and the outer glass plate 15. The light-adjustment component 19 is configured to adjust the visible light transmittance of the laminated glass 10 to meet the optical performance requirements of different usage scenarios.

It may be understood that, when the laminated glass 10 includes the light-adjustment component 19, the number of adhesive layers 17 is 2, and the light-adjustment component 19 is disposed between two adjacent adhesive layers 17.

Specifically, in some embodiments, the laminated glass 10 includes the low-emissivity coating 13, the inner glass plate 11, the adhesive layer 17, the light-adjustment component 19, the adhesive layer 17, and the outer glass plate 15 stacked in sequence. In other embodiments, the laminated glass 10 includes the low-emissivity coating 13, the inner glass plate 11, the adhesive layer 17, the light-adjustment component 19, the adhesive layer 17, the infrared reflection coating 18, and the outer glass plate 15 stacked in sequence. In other embodiments, the laminated glass 10 includes the low-emissivity coating 13, the inner glass plate 11, the adhesive layer 17, the light-adjustment component 19, the adhesive layer 17, the infrared reflection coating 18, an organic resin film (polyethylene terephthalate, PET), the adhesive layer 17, and the outer glass plate 15 stacked in sequence.

Optionally, the light-adjustment component 19 includes at least one of polymer dispersed liquid crystal (PDLC) light-adjustment film, suspended particle device (SPD) light-adjustment film, or electrochromic (EC) light-adjustment film.

The laminated glass 10 provided in the disclosure will be further described through specific embodiments in the following.

### Examples 1 to 5

In examples 1 to 5, the laminated glass 10 each includes the low-emissivity coating 13, the inner glass plate 11, the adhesive layer 17, and the outer glass plate 15 stacked in sequence. The low-emissivity coating 13 includes a Si₃N₄ layer, a SiO₂ layer, an ITO layer, a SiO₂ layer, an ITO layer, a Si₃N₄ layer, and a SiO₂ layer stacked in sequence on the fourth surface 112 of the inner glass plate 11 through magnetron sputtering process, where the ITO layer is the transparent conductive oxide coating and the others are the first dielectric layers. The low-emissivity coating 13 includes two ITO layers, and the target material for magnetron sputtering the ITO layer has a mass ratio of In₂O₃ to SnO₂ of 90:10.

### Example 1

The inner glass plate 11 is a grey glass with the thickness of 2.1mm and has a visible light transmittance of 28%. The adhesive layer 17 is a grey PVB film with the thickness of 0.76mm and has a visible light transmittance of 2%. The outer glass plate 15 is a green glass with the thickness of 2.1mm and has a visible light transmittance of 82%. The low-emissivity coating 13 includes a Si₃N₄ layer (6nm), a SiO₂ layer (63nm), an ITO layer (20nm), a SiO₂ layer (34nm), an ITO layer (120nm), a Si₃N₄ layer (18nm), and a SiO₂ layer (82nm) stacked in sequence in a direction away from the fourth surface 112.

### Example 2

The configuration of example 2 is the same as in example 1, except that the adhesive layer 17 is a grey PVB film with the thickness of 0.76mm and has a visible light transmittance of 8%.

### Example 3

The configuration of example 3 is the same as in example 1, except that the outer glass plate 15 is a grey glass with the thickness of 2.1mm and has a visible light transmittance of 40%, and the adhesive layer 17 is a grey PVB film with the thickness of 0.76mm and has a visible light transmittance of 8%.

### Example 4

The configuration of example 4 is the same as in example 1, except that the outer glass plate 15 is a grey glass with the thickness of 2.1mm and has a visible light transmittance of 40%, the adhesive layer 17 is a grey PVB film with the thickness of 0.76mm and has a visible light transmittance of 18%, and the low-emissivity coating 13 includes a Si₃N₄ layer (6nm), a SiO₂ layer (63nm), an ITO layer (20nm), a SiO₂ layer (34nm), an ITO layer (80nm), a Si₃N₄ layer (18nm), and a SiO₂ layer (82nm) stacked in sequence in a direction away from the fourth surface 112.

### Example 5

The configuration of example 5 is the same as in example 1, except that the outer glass plate 15 is a grey glass with the thickness of 2.1mm and has a visible light transmittance of 28%, the adhesive layer 17 is a grey PVB film with the thickness of 0.76mm and has a visible light transmittance of 18%, and the low-emissivity coating 13 includes a Si₃N₄ layer (6nm), a SiO₂ layer (63nm), an ITO layer (20nm), a SiO₂ layer (34nm), an ITO layer (100nm), a Si₃N₄ layer (18nm), and a SiO₂ layer (82nm) stacked in sequence in a direction away from the fourth surface 112.

Performance testing is as follows.

For each of the laminated glass 10 of examples 1 to 5 obtained through vehicle glass production process, a visible light transmittance (TL) test, an infrared transmittance (T_{nIR}) test, an infrared reflectivity (R_{IR}) test, and a total solar transmittance (TTS) test are performed, and the thermal insulation index C is calculated. Testing results and calculation results of examples 1 to 5 are shown in table 1.

Visible light transmittance (TL) test: the transmittance of the laminated glass 10 for visible light with a wavelength of 380nm to 780nm is measured and calculated according to ISO9050.

Infrared transmittance (T_{nIR}) test: the transmittance of the laminated glass 10 for infrared with a wavelength of 1000nm to 1250nm is measured and calculated according to ISO9050.

Infrared reflectivity (R_{IR}) test: the reflectivity of the laminated glass 10 for infrared with a wavelength of 780nm to 2500nm is measured at one side of the low-emissivity coating 13 away from the inner glass plate 11 and calculated according to ISO9050.

Total solar transmittance (TTS) test: the total solar transmittance of the laminated glass 10 for light with a wavelength of 300nm to 2500nm is measured and calculated according to ISO9050.

Calculation of thermal insulation index *C*: the thermal insulation index of the laminated glass 10 is calculated through formula *C =* T_{nIR} / R_{IR}.

Emissivity *e* test: an emissivity meter is used to measure the laminated glass 10 at one side of the low-emissivity coating 13 away from the inner glass plate 11, that is, at the inside of the vehicle.

**Table 1: measurement results and calculation results of laminated glass 10 of examples 1 to 5**

| | Example 1 | Example 2 | Example 3 | Example 4 | Example 5 |
|---|---|---|---|---|---|
| Mass fraction of total iron as Fe₂O₃ in the inner glass plate | 1.81% | 1.82% | 1.83% | 1.84% | 1.84% |
| Total thickness of the ITO layer in the low-emissivity coating | 140nm | 140nm | 140nm | 100nm | 120nm |
| Ratio of a mass of total iron as Fe₂O₃ in the inner glass plate to a mass of indium in the 1 to 3 transparent conductive oxide coatings | 127.4 | 128.1 | 128.8 | 181.4 | 151.1 |
| Visible light transmittance TL | 0.67% | 3.17% | 1.40% | 6.90% | 5.08% |
| Infrared transmittance T_{nIR} | 0.28% | 0.46% | 0.26% | 1.54% | 0.82% |
| Infrared reflectivity R_{IR} | 5.90% | 7.20% | 6.75% | 6.98% | 6.98% |
| Total solar transmittance TTS | 17.40% | 17.98% | 17.67% | 21.34% | 19.73% |
| Thermal insulation index *C* | 0.047 | 0.064 | 0.039 | 0.221 | 0.117 |
| Emissivity *e* | 0.17 | 0.17 | 0.17 | 0.19 | 0.18 |

According to table 1, by selecting appropriate outer glass plate 15, adhesive layer 17, and inner glass plate 11 with the low-emissivity coating 13, the visible light transmittance of the laminated glass 10 provided in examples 1 to 5 may be within the range of 0.5% to 7%, or even within the range of 0.5% to 4%, the total solar transmittance of the laminated glass 10 provided in examples 1 to 5 may be less than or equal to 25%, or even less than or equal to 20%, and the emissivity of the laminated glass 10 provided in examples 1 to 5 may be less than or equal to 0.20. In this way, the laminated glass 10 provided in examples 1 to 5 each has a low visible light transmittance, an excellent heat insulation, and a low emissivity, and is more suitable for use as sunroof glass or panoramic roof glass. Meanwhile, the laminated glass 10 provided in examples 1 to 5 each has a relatively low thermal insulation index *C* in a range of 0.03 to 0.25, thereby having a good thermal blocking effect. When the laminated glass 10 provided in examples 1 to 5 are used as sunroof glass or panoramic roof glass, a good body surface sensation may be provided for passengers.

### Examples 6 to 10

In examples 6 to 10, the laminated glass 10 each includes the low-emissivity coating 13, the inner glass plate 11, the adhesive layer 17, the infrared reflection coating 18, and the outer glass plate 15 stacked in sequence. The low-emissivity coating 13 includes a Si₃N₄ layer, a SiO₂ layer, an ITO layer, a SiO₂ layer, an ITO layer, a Si₃N₄ layer, and a SiO₂ layer stacked in sequence on the fourth surface 112 of the inner glass plate 11 through magnetron sputtering process, where the ITO layer is the transparent conductive oxide coating and the others are the first dielectric layers. The low-emissivity coating 13 includes two ITO layers, and the target material for magnetron sputtering the ITO layer has a mass ratio of In₂O₃ to SnO₂ of 90:10. The infrared reflection coating 18 is deposited on the second surface 152 of the outer glass plate 15 through magnetron sputtering process, and the infrared reflection coating 18 includes two or three metal layers 184 and multiple second dielectric layers, where the metal layer 184 is a silver layer.

### Example 6

The inner glass plate 11 is a grey glass with the thickness of 2.1mm and has a visible light transmittance of 28%. The adhesive layer 17 is a grey PVB film with the thickness of 0.76mm and has a visible light transmittance of 18%. The outer glass plate 15 is a clear glass with the thickness of 2.1mm and has a visible light transmittance of 88%. The low-emissivity coating 13 includes a Si₃N₄ layer (6nm), a SiO₂ layer (63nm), an ITO layer (20nm), a SiO₂ layer (34nm), an ITO layer (120nm), a Si₃N₄ layer (18nm), and a SiO₂ layer (82nm) stacked in sequence in a direction away from the fourth surface 112. The infrared reflection coating 18 includes a Si₃N₄ layer (32nm), an AZO layer (7nm), an Ag layer (10.1nm), a TiOₓ layer (2nm), an AZO layer (8nm), a ZnSnOₓ layer (66nm), an AZO layer (7nm), an Ag layer (8.1nm), a TiOₓ layer (2nm), an AZO layer (8nm), a ZnSnOₓ layer (145nm), and a Si₃N₄ layer (5nm) stacked in sequence in a direction away from the second surface 152, where the AZO is aluminum-doped zinc oxide.

### Example 7

The configuration of example 7 is the same as in example 6, except that the adhesive layer 17 is a grey PVB film with the thickness of 0.76mm and has a visible light transmittance of 8%.

### Example 8

The configuration of example 8 is the same as in example 6, except that the adhesive layer 17 is a grey PVB film with the thickness of 0.76mm and has a visible light transmittance of 2%.

### Example 9

The configuration of example 9 is the same as in example 6, except that the inner glass plate 11 is a grey glass with the thickness of 2.1mm and has a visible light transmittance of 40%, the adhesive layer 17 is a grey PVB film with the thickness of 0.76mm and has a visible light transmittance of 8%, and the infrared reflection coating 18 includes a ZnSnOₓ layer (26nm), an AZO layer (10.8nm), an Ag layer (13nm), an AZO layer (8.6nm), a ZnSnOₓ layer (56.8nm), an AZO layer (8.8nm), an Ag layer (14.4nm), an AZO layer (8.4nm), a ZnSnOₓ layer (54.8nm), an AZO layer (8.6nm), an Ag layer (13nm), an AZO layer (9nm), a ZnSnOₓ layer (19.9nm), and a Si₃N₄ layer (10.3nm) stacked in sequence in a direction away from the second surface 152.

### Example 10

The configuration of example 10 is the same as in example 6, except that the adhesive layer 17 is a grey PVB film with the thickness of 0.76mm and has a visible light transmittance of 5%, and the infrared reflection coating 18 includes a ZnSnOₓ layer (26nm), an AZO layer (10.8nm), an Ag layer (13nm), an AZO layer (8.6nm), a ZnSnOₓ layer (56.8nm), an AZO layer (8.8nm), an Ag layer (14.4nm), an AZO layer (8.4nm), a ZnSnOₓ layer (54.8nm), an AZO layer (8.6nm), an Ag layer (13nm), an AZO layer (9nm), a ZnSnOₓ layer (19.9nm), and a Si₃N₄ layer (10.3nm) stacked in sequence in a direction away from the second surface 152.

Performance testing is as follows.

For each of the laminated glass 10 of examples 6 to 10 obtained through vehicle glass production process, a visible light transmittance (TL) test, an infrared transmittance (T_{nIR}) test, an infrared reflectivity (R_{IR}) test, and a total solar transmittance (TTS) test are performed, and the thermal insulation index C is calculated. Testing results and calculation results of examples 6 to 10 are shown in table 2.

Visible light transmittance (TL) test: the transmittance of the laminated glass 10 for visible light with a wavelength of 380nm to 780nm is measured and calculated according to ISO9050.

Infrared transmittance (T_{nIR}) test: the transmittance of the laminated glass 10 for infrared with a wavelength of 1000nm to 1250nm is measured and calculated according to ISO9050.

Infrared reflectivity (R_{IR}) test: the reflectivity of the laminated glass 10 for infrared with a wavelength of 780nm to 2500nm is measured at one side of the low-emissivity coating 13 away from the inner glass plate 11 and calculated according to ISO9050.

Total solar transmittance (TTS) test: the total solar transmittance of the laminated glass 10 for light with a wavelength of 300nm to 2500nm is measured and calculated according to ISO9050.

Calculation of thermal insulation index *C*: the thermal insulation index of the laminated glass 10 is calculated through formula *C* = T_{nIR} / R_{IR}.

Emissivity *e* test: an emissivity meter is used to measure the laminated glass 10 at one side of the low-emissivity coating 13 away from the inner glass plate 11, that is, at the inside of the vehicle.

**Table 2: measurement results and calculation results of laminated glass 10 of examples 6 to 10**

| | Example 6 | Example 7 | Example 8 | Example 9 | Example 10 |
|---|---|---|---|---|---|
| Mass fraction of total iron as Fe₂O₃ in the inner glass plate | 1.81% | 1.82% | 1.83% | 1.18% | 1.84% |
| Total thickness of the ITO layer in the low-emissivity coating | 140nm | 140nm | 140nm | 140nm | 140nm |
| Ratio of a mass of total iron as Fe₂O₃ in the inner glass plate to a mass of indium in the 1 to 3 transparent conductive oxide coatings | 127.4 | 128.1 | 128.8 | 83.08 | 129.5 |
| Visible light transmittance TL | 5.22% | 2.53% | 0.52% | 2.74% | 1.21% |
| Infrared transmittance T_{nIR} | 0.68% | 0.13% | 0.09% | 0.07% | 0.06% |
| Infrared reflectivity R_{IR} | 6.54% | 7.57% | 5.90% | 6.20% | 6.10% |
| Total solar transmittance TTS | 15.45% | 13.04% | 12.65% | 11.66% | 10.98% |
| Thermal insulation index *C* | 0.104 | 0.017 | 0.015 | 0.011 | 0.011 |
| Emissivity *e* | 0.17 | 0.17 | 0.17 | 0.17 | 0.17 |

According to table 2, by adding the infrared reflection coating 18 and selecting appropriate adhesive layer 17 and inner glass plate 11 with the low-emissivity coating 13, the visible light transmittance of the laminated glass 10 provided in examples 6 to 10 may be within the range of 0.5% to 6%, or even within the range of 0.5% to 3%, the total solar transmittance of the laminated glass 10 provided in examples 6 to 10 may be less than or equal to 16%, or even less than or equal to 13%, and the emissivity of the laminated glass 10 provided in examples 6 to 10 may be less than or equal to 0.20. In this way, the laminated glass 10 provided in examples 6 to 10 each has a low visible light transmittance, an excellent heat insulation, and a low emissivity, and is more suitable for use as sunroof glass or panoramic roof glass. Meanwhile, the laminated glass 10 provided in examples 6 to 10 each has a relatively low thermal insulation index *C* in a range of 0.009 to 0.15, or even 0.009 to 0.10, or more even 0.009 to 0.05, thereby having a good thermal blocking effect. When the laminated glass 10 provided in examples 6 to 10 are used as sunroof glass or panoramic roof glass, a good body surface sensation may be provided for passengers.

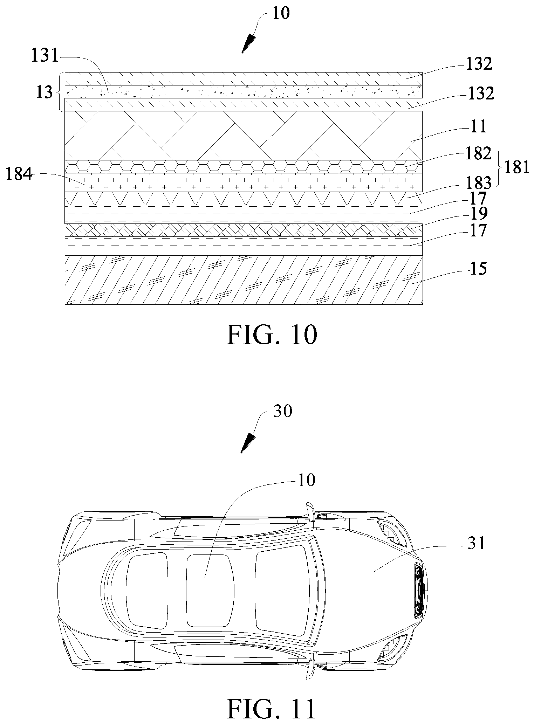

Reference is made to FIG. 11. Embodiments of the disclosure further provide a vehicle 30. The vehicle 30 includes a vehicle body 31 and the laminated glass 10 provided in the disclosure. The laminated glass 10 is mounted on the vehicle body 31 as at least one of a sunroof glass, a side window glass, or a rear windshield glass of the vehicle 30. In the vehicle 30 provided in the disclosure, the visible light transmittance and the total solar transmittance of the laminated glass 10 are both low, so that the laminated glass 10 has a good thermal blocking effect. In addition, the laminated glass 10 has a low emissivity, so that passengers can have a good experience when the laminated glass 10 is applied to the vehicle.

Optionally, the vehicle 30 may be, but is not limited to a car, a truck, a sedan, etc.

It may be understood that, in some embodiments, the sunroof glass of the vehicle 30 is the laminated glass 10 provided in the disclosure. In other embodiments, the side window glass of the vehicle 30 is the laminated glass 10 provided in the disclosure. In other embodiments, the rear windshield glass of the vehicle 30 is the laminated glass 10 provided in the disclosure. In other embodiments, the sunroof glass and the rear windshield glass of the vehicle 30 are laminated glass 10 provided in the disclosure. In other embodiments, the sunroof glass and the side window glass of the vehicle 30 are laminated glass 10 provided in the disclosure. In other embodiments, the side window glass and the rear windshield glass of the vehicle 30 are laminated glass 10 provided in the disclosure. In other embodiments, the sunroof glass, the side window glass, and the rear windshield glass of vehicle 30 are the laminated glass 10 provided in the disclosure.

The term "embodiment" or "implementation" referred to herein means that a particular feature, structure, or feature described in conjunction with the embodiment may be contained in at least one embodiment of the disclosure. Phrases of "embodiment" appearing in various places in the specification does not necessarily refer to the same embodiment, nor does it refer to an independent or alternative embodiment that is mutually exclusive with other embodiments. It is explicitly and implicitly understood by those of ordinary skill in the art that an embodiment described herein may be combined with other embodiments. In addition, it can be further understood that the features, structures, or characteristics described in embodiments of the disclosure may be combined arbitrarily without contradiction therebetween to form another embodiment that does not depart from the scope of the technical solutions of the disclosure.

Finally, it should be noted that the foregoing embodiments are merely intended to illustrate but not limit the technical solutions of the disclosure. Although the disclosure is described in detail with reference to the foregoing optimal embodiments, those of ordinary skill in the art should understand that modifications or equivalent replacements can be made to the technical solutions of the disclosure without departing from the scope of the technical solutions of the disclosure.

## Claims

1. A laminated glass (10), comprising an outer glass plate (15), an adhesive layer (17), an inner glass plate (11), and a low-emissivity coating (13) stacked in sequence; wherein
the outer glass plate (15) has a first surface (151) and a second surface (152) opposite to each other, the inner glass plate (11) has a third surface (111) and a fourth surface (112) opposite to each other, and the adhesive layer (17) is used to connect the second surface (152) and the third surface (111);
the low-emissivity coating (13) is disposed on the fourth surface (112) of the inner glass plate (11) and comprises 1 to 3 transparent conductive oxide coatings (131); and
a thermal insulation index C of the laminated glass (10) satisfies: *C* = T_{nIR} / R_{IR}, wherein a range of the thermal insulation index *C* is 0.008 ≤ *C* ≤ 0.4, T_{nIR} is a transmittance of the laminated glass (10) for infrared with a wavelength of 1000nm to 1250 nm, measured and calculated according to ISO9050, and R_{IR} is a reflectivity of the laminated glass (10) for infrared with a wavelength of 780nm to 2500nm measured at one side of the low-emissivity coating (13) away from the inner glass plate (11), measured and calculated according to ISO9050.

2. The laminated glass (10) of claim 1, wherein a material of each of the 1 to 3 transparent conductive oxide coatings (131) is indium tin oxide, ITO, the inner glass plate (11) comprises iron oxide, and a ratio of a mass of total iron as Fe₂O₃ in the inner glass plate (11) to a mass of indium in the 1 to 3 transparent conductive oxide coatings (131) ranges from 20:1 to 500:1.

3. The laminated glass (10) of claim 2, wherein the inner glass plate (11) is a tinted glass, a mass fraction of total iron as Fe₂O₃ in the inner glass plate (11) ranges from 0.9% to 2.2%, and a thickness of the inner glass plate (11) ranges from 0.7mm to 2.1mm.

4. The laminated glass (10) of claim 2, wherein a total thickness of the 1 to 3 transparent conductive oxide coatings (131) ranges from 50nm to 300nm, and a ratio of a mass of total iron as Fe₂O₃ in the inner glass plate (11) to a mass of indium in the 1 to 3 transparent conductive oxide coatings (131) ranges from 50:1 to 200:1.

5. The laminated glass (10) of claim 1, wherein a visible light transmittance of the laminated glass (10) ranges from 0.5% to 10%, an emissivity of the laminated glass (10) measured at the side of the low-emissivity coating (13) away from the inner glass plate (11) is less than or equal to 0.25, and a visible light reflectivity of the laminated glass (10) measured at the side of the low-emissivity coating (13) away from the inner glass plate (11) is less than or equal to 4%.

6. The laminated glass (10) of claim 1, wherein the low-emissivity coating (13) further comprises at least two first dielectric layers (132), a first dielectric layer (132) is disposed on each of two opposite surfaces of each transparent conductive oxide coating (131), and a material of the at least two first dielectric layers (132) is selected from nitride, oxide, or oxynitride of at least one of Zn, Sn, Ti, Si, Al, Mg, or Zr.

7. The laminated glass (10) of claim 1, further comprising:
an infrared reflection coating (18), wherein the infrared reflection coating (18) is disposed between the inner glass plate (11) and the outer glass plate (15), the infrared reflection coating (18) comprises 1 to 5 metal layers (184), and a material of each of the 1 to 5 metal layers (184) is selected from a metal or an alloy of at least one of Ag, Au, Cu, Al, or Pt.

8. The laminated glass (10) of claim 7, wherein the infrared reflection coating (18) further comprises at least two second dielectric layers (181), a second dielectric layer (181) is disposed on each of two opposite surfaces of each metal layer (184), and a material of the at least two second dielectric layers (181) is selected from nitride, oxide, or oxynitride of at least one of Zn, Sn, Ti, Si, Al, Ni, Cr, Nb, Mg, Zr, Ga, Y, In, Sb, V, or Ta.

9. The laminated glass (10) of claim 7, wherein the outer glass plate (15) is a clear glass with a visible light transmittance greater than or equal to 80%, or the outer glass plate (15) is a clear glass with a visible light transmittance greater than or equal to 90%.

10. The laminated glass (10) of claim 1, wherein the laminated glass (10) does not comprise an infrared reflection coating (18), the outer glass plate (15) is a tinted glass, a mass fraction of total iron as Fe₂O₃ in the outer glass plate (15) ranges from 0.7% to 2.2%, and a thickness of the outer glass plate (15) ranges from 2.1mm to 4.2mm.

11. The laminated glass (10) of claim 1, wherein the range of the thermal insulation index *C* of the laminated glass (10) is 0.03 ≤ *C* ≤ 0.25, or the range of the thermal insulation index *C* of the laminated glass (10) is 0.009 ≤ *C* ≤ 0.15, or the range of the thermal insulation index *C* of the laminated glass (10) is 0.009 ≤ *C* ≤ 0.10, or the range of the thermal insulation index *C* of the laminated glass (10) is 0.009 ≤ *C* ≤ 0.05.

12. The laminated glass (10) of claim 1, wherein the adhesive layer (17) is a tinted thermoplastic polymer film, and the thermoplastic polymer film is selected from at least one of polyvinyl butyral, polyurethane, ethylene-vinyl acetate copolymer, or ionic polymer, and the adhesive layer (17) has a visible light transmittance ranging from 1% to 20%.

13. The laminated glass (10) of claim 1, wherein a visible light transmittance of the inner glass plate (11) ranges from 34% to 42%, and a value range of *L* in a Lab value of a color of the inner glass plate (11) is 65 to 71.5, a value range of *a* is -3.5 to -2, and a value range of *b* is 2 to 3.5; or a visible light transmittance of the inner glass plate (11) ranges from 26% to 34%, and a value range of *L* in a Lab value of a color of the inner glass plate (11) is 58.5 to 65, a value range of *a* is -5 to -3.5, and a value range of *b* is 0.5 to 2.

14. The laminated glass (10) of claim 1, further comprising:
a light-adjustment component (19) disposed between the second surface (152) and the third surface (111), and the light-adjustment component (19) comprises at least one of a polymer-dispersed liquid crystal light-adjustment film, a suspended particle light-adjustment film, or an electrochromic light-adjustment film.

15. A vehicle (30), comprising:
a vehicle body (31); and
the laminated glass (10) of any one of claims 1 to 14, wherein the laminated glass (10) is mounted on the vehicle body (31) as at least one of a sunroof glass, a side window glass, or a rear windshield glass of the vehicle (30).

## Patentansprüche

1. Laminiertes Glas (10), umfassend eine äußere Glasplatte (15), eine Haftschicht (17) eine innere Glasplatte (11) und eine Beschichtung (13) mit niedrigem Emissionsvermögen, die nacheinander gestapelt sind; wobei
die äußere Glasplatte (15) eine erste Fläche (151) und eine zweite Fläche (152) entgegengesetzt zueinander aufweist, wobei die innere Glasplatte (11) eine dritte Fläche (111) und eine vierte Fläche (112) entgegengesetzt zueinander aufweist und die Haftschicht (17) verwendet wird, um die zweite Fläche (152) und die dritte Fläche (111) zu verbinden;
die Beschichtung (13) mit niedrigem Emissionsvermögen auf der vierten Fläche (112) der inneren Glasplatte (11) angeordnet ist und 1 bis 3 transparente leitfähige Oxidbeschichtungen (131) umfasst; und
wobei ein Wärmeisolierungsindex C des laminierten Glases (10) Folgendes erfüllt: *C*=T_{n1R}/R_{1R}, wobei ein Bereich des Wärmeisolierungsindex *C* 0,008 ≤ *C* ≤ 0,4 ist, T_{n1R} eine Durchlässigkeit des laminierten Glases (10) für Infrarot mit einer Wellenlänge von 1.000 nm bis 1.250 nm, gemessen und berechnet gemäß ISO9050, ist und R_{1R} ein Reflexionsvermögen des laminierten Glases (10) für Infrarot mit einer Wellenlänge von 780 nm bis 2.500 nm, gemessen auf einer von der inneren Glasplatte (11) weggewandten Seite der Beschichtung (13) mit niedrigem Emissionsvermögen, gemessen und berechnet gemäß ISO9050, ist.

2. Laminiertes Glas (10) nach Anspruch 1, wobei ein Material von jeder aus den eins bis drei transparenten leitfähigen Oxidbeschichtungen (131) Indiumzinnoxid, ITO, ist, wobei die innere Glasplatte (11) Eisenoxid umfasst und ein Verhältnis der Gesamtmasse an Eisen als Fe₂O₃ in der inneren Glasplatte (11) zu einer Masse von Indium in den ein bis drei transparenten leitfähigen Oxidbeschichtungen (131) im Bereich von 20:1 bis 500:1 liegt.

3. Laminiertes Glas (10) nach Anspruch 2, wobei die innere Glasplatte (11) getöntes Glas ist, ein Massenanteil der Gesamtmenge von Eisen als Fe₂O₃ in der inneren Glasplatte (11) im Bereich von 0,9 % bis 2,2 % liegt und eine Dicke der inneren Glasplatte (11) im Bereich von 0,7 mm bis 2,1 mm liegt.

4. Laminiertes Glas (10) nach Anspruch 2, wobei eine Gesamtdicke der eins bis drei transparenten leitfähigen Oxidbeschichtungen (131) im Bereich von 50 nm bis 300 nm liegt und ein Verhältnis der Gesamtmasse von Eisen als Fe₂O₃ in der inneren Glasplatte (11) zu einer Masse von Indium in den eins bis drei transparenten leitfähigen Oxidbeschichtungen (131) im Bereich von 50:1 bis 200:1 liegt.

5. Laminiertes Glas (10) nach Anspruch 1, wobei eine Durchlässigkeit für sichtbares Licht des laminierten Glases (10) im Bereich von 0.5 % bis 10 % liegt, ein Emissionsvermögen des laminierten Glases (10), gemessen auf der von der inneren Glasplatte (11) weggewandten Seite der Beschichtung (13) mit niedrigem Emissionsvermögen, kleiner oder gleich 0,25 ist und ein Reflexionsvermögen des laminierten Glases (10) für sichtbares Licht, gemessen auf der von der inneren Glasplatte (11) weggewandten Seite der Beschichtung (13) mit niedrigem Emissionsvermögen, kleiner oder gleich 4 % ist.

6. Laminiertes Glas (10) nach Anspruch 1, wobei die Beschichtung (13) mit niedrigem Emissionsvermögen ferner zumindest zwei dielektrische Schichten (132) umfasst, wobei eine erste dielektrische Schicht (132) auf jeder aus zwei entgegengesetzten Flächen von jeder transparenten leitfähigen Oxidbeschichtung (131) angeordnet ist und ein Material der zumindest zwei ersten dielektrischen Schichten (132) aus Nitrid, Oxid oder Oxynitrid von zumindest einem aus Zn, Sn, Ti, Si, Al, Mg oder Zr ausgewählt ist.

7. Laminiertes Glas (10) nach Anspruch 1, ferner umfassend:
eine Infrarotreflexionsbeschichtung (18), wobei die Infrarotreflexionsbeschichtung (18) zwischen der inneren Glasplatte (11) und der äußeren Glasplatte (15) angeordnet ist, wobei die Infrarotreflexionsbeschichtung (18) eins bis fünf Metallschichten (184) umfasst und ein Material von jeder aus den 1 bis 5 Metallschichten (184) aus einem Metall oder einer Legierung von zumindest einem aus Ag, Au, Cu, Al oder Pt ausgewählt ist.

8. Laminiertes Glas (10) nach Anspruch 7, wobei die Infrarotreflexionsbeschichtung (18) ferner zumindest zwei zweite dielektrische Schichten (181) umfasst, wobei eine zweite dielektrische Schicht (181) auf jeder aus zwei entgegengesetzten Flächen von jeder Metallschicht (184) angeordnet ist und ein Material von den zumindest zwei zweiten dielektrischen Schichten (181) aus Nitrid, Oxid oder Oxynitrid von zumindest einem aus Zn, Sn, Ti, Si, Al, Ni, Cr, Nb, Mg, Zr, Ga, Y, In, Sb, V oder Ta ausgewählt ist.

9. Laminiertes Glas (10) nach Anspruch 7, wobei die äußere Glasplatte (15) ein Klarglas mit einer Durchlässigkeit für sichtbares Licht von größer oder gleich 80 % ist oder wobei die äußere Glasplatte (15) ein Klarglas mit einer Durchlässigkeit für sichtbares Licht von größer oder gleich 90 % ist.

10. Laminiertes Glas (10) nach Anspruch 1, wobei das laminierte Glas (10) keine Infrarotreflexionsbeschichtung (18) umfasst, die äußere Glasplatte (15) ein getöntes Glas ist, ein Massenanteil der Gesamtmenge von Eisen als Fe₂O₃ in der äußeren Glasplatte (15) im Bereich von 0,7 % bis 2,2 % liegt und eine Dicke der äußeren Glasplatte (15) im Bereich von 2,1 mm bis 4,2 mm liegt.

11. Laminiertes Glas (10) nach Anspruch 1, wobei der Bereich des Wärmeisolierungsindex *C* des laminierten Glases (10) 0,03 ≤ *C* ≤ 0,25 ist oder der Bereich des Wärmeisolierungsindex *C* des laminierten Glases (10) 0,009 ≤ *C* ≤ 0,15 ist oder der Bereich des Wärmeisolierungsindex *C* des laminierten Glases (10) 0,009 ≤ *C* ≤ 0,10 ist oder der Bereich des Wärmeisolierungsindex *C* des laminierten Glases (10) 0,009 ≤ *C* ≤ 0,05 ist.

12. Laminiertes Glas (10) nach Anspruch 1, wobei die Haftschicht (17) ein getönter thermoplastischer Polymerfilm ist und der thermoplastische Polymerfilm aus zumindest einen aus Polyvinylbutyral, Polyurethan, Ethylenvinylacetatcopolymer oder ionischem Polymer ausgewählt ist und die Haftschicht (17) eine Durchlässigkeit für sichtbares Licht im Bereich von 1 % bis 20 % aufweist.

13. Laminiertes Glas (10) nach Anspruch 1, wobei eine Durchlässigkeit für sichtbares Licht der inneren Glasplatte (11) im Bereich von 34 % bis 42 % liegt und ein Wertebereich *L* in einem Lab-Wert einer Farbe der inneren Glasplatte (11) 65 bis 71,5 beträgt, ein Wertebereich *a* -3,5 bis -2 beträgt und ein Wertebereich *b* 2 bis 3,5 beträgt; oder wobei eine Durchlässigkeit für sichtbares Licht der inneren Glasplatte (11) im Bereich von 26 % bis 34 % liegt und ein Wertebereich *L* in einem Lab-Wert einer Farbe der inneren Glasplatte (11) 58,5 bis 65 beträgt, ein Wertebereich *a* -5 bis -3,5 beträgt und ein Wertebereich *b* 0,5 bis 2 beträgt.

14. Laminiertes Glas (10) nach Anspruch 1, ferner umfassend:
eine Lichtanpassungskomponente (19), die zwischen der zweiten Fläche (152) und der dritten Fläche (111) angeordnet ist, und wobei die Lichtanpassungskomponente (19) zumindest eines aus einem Lichtanpassungsfilm mit polymerdispergierten Flüssigkristallen, einem Lichtanpassungsfilm mit suspendierten Teilchen oder einem elektrochemischen Lichtanpassungsfilm umfasst.

15. Fahrzeug (30), umfassend:
einen Fahrzeugkörper (31); und
laminiertes Glas (10) nach einem der Ansprüche 1 bis 14, wobei das laminierte Glas (10) als zumindest eines aus einem Sonnendachglas, einem Seitenfensterglas oder einem Heckscheibenglas des Fahrzeugs (30) an dem Fahrzeugkörper (31) montiert ist.

## Revendications

1. Verre feuilleté (10), comprenant une plaque de verre extérieure (15), une couche adhésive (17), une plaque de verre intérieure (11), et un revêtement à faible émissivité (13) empilés séquentiellement ; dans lequel :
la plaque de verre extérieure (15) présente une première surface (151) et une deuxième surface (152) opposées l'une à l'autre, la plaque de verre intérieure (11) présente une troisième surface (111) et une quatrième surface (112) opposées l'une à l'autre, et la couche adhésive (17) est utilisée pour relier la deuxième surface (152) et la troisième surface (111) ;
le revêtement à faible émissivité (13) est disposé sur la quatrième surface (112) de la plaque de verre intérieure (11) et comprend de 1 à 3 revêtements d'oxyde conducteur transparents (131) ; et
un indice d'isolation thermique *C* du verre feuilleté (10) satisfait : *C* = T_{nIR}/R_{IR}, dans lequel une plage de l'indice d'isolation thermique *C* est 0,008 ≤ *C* ≤ 0,4, T_{nIR} est une transmittance du verre feuilleté (10) pour l'infrarouge avec une longueur d'onde de 1 000 nm à 1 250 nm, mesurée et calculée selon ISO9050, et R_{IR} est une réflectivité du verre feuilleté (10) pour l'infrarouge avec une longueur d'onde de 780 nm à 2 500 nm mesurée au niveau d'un côté du revêtement à faible émissivité (13) à l'écart de la plaque de verre intérieure (11), mesurée et calculée selon ISO9050.

2. Verre feuilleté (10) selon la revendication 1, dans lequel un matériau de chacun des 1 à 3 revêtements d'oxyde conducteur transparents (131) est de l'oxyde d'indium et d'étain, ITO, la plaque de verre intérieure (11) comprend de l'oxyde de fer, et un rapport d'une masse de fer total sous forme de Fe₂O₃ dans la plaque de verre intérieure (11) à une masse d'indium dans les 1 à 3 revêtements d'oxyde conducteur transparents (131) est compris entre 20:1 et 500:1.

3. Verre feuilleté (10) selon la revendication 2, dans lequel la plaque de verre intérieure (11) est un verre teinté, une fraction massique de fer total sous forme de Fe₂O₃ dans la plaque de verre intérieure (11) est comprise entre 0,9 % et 2,2 %, et une épaisseur de la plaque de verre intérieure (11) est comprise entre 0,7 mm et 2,1 mm.

4. Verre feuilleté (10) selon la revendication 2, dans lequel une épaisseur totale des 1 à 3 revêtements d'oxyde conducteur transparents (131) est comprise entre 50 nm et 300 nm, et un rapport d'une masse de fer total sous forme de Fe₂O₃ dans la plaque de verre intérieure (11) à une masse d'indium dans les 1 à 3 revêtements d'oxyde conducteur transparents (131) est compris entre 50:1 et 200:1.

5. Verre feuilleté (10) selon la revendication 1, dans lequel une transmittance de lumière visible du verre feuilleté (10) est comprise entre 0,5 % et 10 %, une émissivité du verre feuilleté (10) mesurée sur le côté du revêtement à faible émissivité (13) éloigné de la plaque de verre intérieure (11) est inférieure ou égale à 0,25, et une réflectivité de lumière visible du verre feuilleté (10) mesurée sur le côté du revêtement à faible émissivité (13) éloigné de la plaque de verre intérieure (11) est inférieure ou égale à 4 %.

6. Verre feuilleté (10) selon la revendication 1, dans lequel le revêtement à faible émissivité (13) comprend en outre au moins deux premières couches diélectriques (132), une première couche diélectrique (132) est disposée sur chacune de deux surfaces opposées de chaque revêtement d'oxyde conducteur transparent (131), et un matériau des au moins deux premières couches diélectriques (132) est choisi parmi le nitrure, l'oxyde ou l'oxynitrure d'au moins un élément parmi Zn, Sn, Ti, Si, Al, Mg ou Zr.

7. Verre feuilleté (10) selon la revendication 1, comprenant en outre :
un revêtement de réflexion infrarouge (18), dans lequel le revêtement de réflexion infrarouge (18) est disposé entre la plaque de verre intérieure (11) et la plaque de verre extérieure (15), le revêtement de réflexion infrarouge (18) comprend de 1 à 5 couches métalliques (184), et un matériau de chacune des 1 à 5 couches métalliques (184) est sélectionné parmi un métal ou un alliage d'au moins un parmi Ag, Au, Cu, Al, ou Pt.

8. Verre feuilleté (10) selon la revendication 7, dans lequel le revêtement de réflexion infrarouge (18) comprend en outre au moins deux secondes couches diélectriques (181), une seconde couche diélectrique (181) est disposée sur chacune de deux surfaces opposées de chaque couche métallique (184), et un matériau des au moins deux secondes couches diélectriques (181) est choisi parmi le nitrure, l'oxyde, ou l'oxynitrure d'au moins un parmi Zn, Sn, Ti, Si, Al, Ni, Cr, Nb, Mg, Zr, Ga, Y, In, Sb, V, ou Ta.

9. Verre feuilleté (10) selon la revendication 7, dans lequel la plaque de verre extérieure (15) est un verre transparent avec une transmittance de lumière visible supérieure ou égale à 80 %, ou la plaque de verre extérieure (15) est un verre transparent avec une transmittance de lumière visible supérieure ou égale à 90 %.

10. Verre feuilleté (10) selon la revendication 1, dans lequel le verre feuilleté (10) ne comprend pas de revêtement de réflexion infrarouge (18), la plaque de verre extérieure (15) est un verre teinté, une fraction massique de fer total sous forme de Fe₂O₃ dans la plaque de verre extérieure (15) est comprise entre 0,7 % et 2,2 %, et une épaisseur de la plaque de verre extérieure (15) est comprise entre 2,1 mm et 4,2 mm.

11. Verre feuilleté (10) selon la revendication 1, dans lequel la plage de l'indice d'isolation thermique *C* du verre feuilleté (10) est 0,03 ≤ *C* ≤ 0,25, ou la plage de l'indice d'isolation thermique *C* du verre feuilleté (10) est 0,009 ≤ *C ≤* 0,15, ou la plage de l'indice d'isolation thermique *C* du verre feuilleté (10) est 0,009 ≤ *C ≤* 0,10, ou la plage de l'indice d'isolation thermique *C* du verre feuilleté (10) est 0,009 ≤ *C* ≤ 0,05.

12. Verre feuilleté (10) selon la revendication 1, dans lequel la couche adhésive (17) est un film de polymère thermoplastique teinté, et le film de polymère thermoplastique est choisi parmi au moins un parmi le polyvinylbutyral, le polyuréthane, un copolymère d'éthylène-acétate de vinyle ou un polymère ionique, et la couche adhésive (17) présente une transmittance de lumière visible allant de 1 % à 20 %.

13. Verre feuilleté (10) selon la revendication 1, dans lequel une transmittance de lumière visible de la plaque de verre intérieure (11) est comprise entre 34 % et 42 %, et une plage de valeurs de *L* dans une valeur Lab d'une couleur de la plaque de verre intérieure (11) est comprise entre 65 et 71,5, une plage de valeurs de *α* est comprise entre -3,5 et -2, et une plage de valeurs de *b* est comprise entre 2 et 3,5 ; ou une transmittance de lumière visible de la plaque de verre intérieure (11) est comprise entre 26 % et 34 %, et une plage de valeurs de *L* dans une valeur Lab d'une couleur de la plaque de verre intérieure (11) est comprise entre 58,5 et 65, une plage de valeurs de *α* est comprise entre -5 et -3,5, et une plage de valeurs de *b* est comprise entre 0,5 et 2.

14. Verre feuilleté (10) selon la revendication 1, comprenant en outre :
un composant d'ajustement de lumière (19) disposé entre la deuxième surface (152) et la troisième surface (111), et le composant d'ajustement de lumière (19) comprend au moins un parmi un film d'ajustement de lumière à cristaux liquides dispersés dans un polymère, un film d'ajustement de lumière à particules en suspension, ou un film d'ajustement de lumière électrochrome.

15. Véhicule (30), comprenant :
Une carrosserie de véhicule (31);
le verre feuilleté (10) selon l'une quelconque des revendications 1 à 14, dans lequel le verre feuilleté (10) est monté sur la carrosserie de véhicule (31) sous la forme d'au moins un parmi un verre de toit ouvrant, un verre de vitre latérale ou un verre de pare-brise arrière du véhicule (30).
